# EUROPEAN PATENT SPECIFICATION

(11) **EP 4 541 624 B1**
(45) Date of publication and mention of the grant of the patent: **11.03.2026**
(21) Application number: 24189163.9
(22) Date of filing: 17.07.2024
(51) Int. Cl.: B60K 11/04, B60R 19/52, B62J 17/10, B62J 41/00

(54) **RADIATOR GRILLE OF A STRADDLED VEHICLE**
KÜHLERSCHUTZGITTER EINES SATTELFAHRZEUGS
GRILLE DE RADIATEUR D'UN VÉHICULE À SELLE

(30) Priority: 19.10.2023 JP 2023180097
(43) Date of publication of application: 23.04.2025
(73) Proprietor: Yamaha Hatsudoki Kabushiki Kaisha, Iwata-shi, Shizuoka 438-8501 (JP)
(72) Inventor: Sakai, Taishi, Iwata, Shizuoka, 438-0026 (JP); Akimoto, Satoru, Iwata, Shizuoka, 438-0026 (JP); Nishimori, Yuichi, Iwata, Shizuoka, 438-8501 (JP)
(74) Representative: Grünecker Patent- und Rechtsanwälte PartG mbB

(56) References cited:
- JP-A- 2008 179 336
- US-A- 1 914 253
- US-A- 5 984 035
- US-A1- 2008 156 566

## Description

The present invention relates to a straddled vehicle according to the preamble of independent claim 1. Such a straddled vehicle can be taken from the prior art document US 2008/156566 A1.

JP H09-254853 A discloses a straddled vehicle. The straddled vehicle includes a radiator, a radiator shroud, and a radiator grille. The radiator shroud is located rightward and leftward of the radiator. The radiator grille is mounted in front of the radiator. The radiator grille supplies air to the radiator. Air passes through the radiator grille, and then passes through the radiator.

The radiator grille is constituted by a plurality of louvers. The louvers are lined in a transverse direction of the straddled vehicle. The louvers each extend in a front-back direction in plan view of the straddled vehicle. The louvers each extend in an up-down direction in front view of the straddled vehicle.

A plane that passes through the center of the straddled vehicle and is perpendicular to the transverse direction is called a "vehicle center plane". Among all the louvers, a louver closest to the vehicle center plane is called a "first louver" for convenience. A forward projection distance of the first louver is smaller than a forward projection distance of each of the louvers other than the first louver. In other words, a front end of the first louver is positioned more rearward than front ends of the louvers other than the first louver.

However, the example of the currently-used apparatus with such a construction has the following drawback. An amount of air supplied to the radiator is uneven throughout a front face of the radiator. In other words, an amount of air passing through the radiator is uneven throughout the front face of the radiator. Distribution of an amount of air supplied to the radiator is uneven in the transverse direction.

For example, the radiator includes a middle section and an outer section. The middle section is positioned near the vehicle center plane. The outer section is positioned more outward than the middle section in the transverse direction. A distance between the outer section and the vehicle center plane is larger than a distance between the middle section and the vehicle center plane. An amount of air passing through the outer section is larger than an amount of air passing through the middle section.

It is the object of the present invention to provide a straddled vehicle that allows easy supply of air evenly throughout a radiator.

According to the present invention said object is solved by a straddled vehicle having the features of the independent claim 1. Preferred embodiments are laid down in the dependent claims.

Accordingly, it is provided a straddled vehicle, including:
a head tube;
a front fork supported by the head tube;
a front wheel supported by the front fork;
a left shroud located leftward of the front fork and higher than the front wheel;
a right shroud located rightward of the front fork and higher than the front wheel;
a radiator located rearward of the front fork and between the left shroud and the right shroud; and
a radiator grille located rearward of the front fork, between the left shroud and the right shroud, and forward of the radiator; wherein
the radiator grille includes a plurality of louvers,
the louvers are lined in a transverse direction of the straddled vehicle, and
when it is assumed that a virtual plane passing through the center of the head tube and perpendicular to the transverse direction is a vehicle center plane, and when it is assumed that, among all the louvers, a louver closest to the vehicle center plane is a first louver,
the first louver projects more forward than the louvers other than the first louver.

The straddled vehicle includes the front fork, the left shroud, the right shroud, the radiator, and the radiator grille. The left shroud is located leftward of the front fork. The right shroud is located rightward of the front fork. The radiator is located rearward of the front fork. The radiator is located between the left shroud and the right shroud. The radiator grille is located rearward of the front fork. The radiator grille is located between the left shroud and the right shroud. The radiator grille is located forward of the radiator. The radiator grille supplies air to the radiator. Air passes through the radiator grille, and then passes through the radiator.

The radiator grille includes a plurality of louvers. The louvers are lined in the transverse direction of the straddled vehicle. The first louver is closest to the vehicle center plane among all the louvers. The vehicle center plane is a virtual plane. The vehicle center plane passes the center of the head tube. The vehicle center plane is perpendicular to the transverse direction. The first louver projects more forward than louvers other than the first louver. In other words, a front end of the first louver is positioned more forward than front ends of the louvers other than the first louver. Accordingly, it is easy that the first louver receives air from an area outward thereof in the transverse direction. Consequently, it is easy to increase an amount of air that the first louver receives. It is easy to increase an amount of air that the first louver guides to the radiator. Therefore, it is easy to increase a supply amount of air to a region of the radiator close to the first louver. This results in easy supply of air evenly throughout the radiator. Specifically, it is easy to make distribution of an amount of air, supplied to the radiator, even in the transverse direction.

It is preferred in the straddled vehicle described above that, when it is assumed that one of two louvers adjacent in the transverse direction and close to the vehicle center plane is an inner louver and the other is outer louver, and that the inner louver has a front end and the outer louver has a front end, the front end of the inner louver is located at a position equal to or more forward than the front end of the outer louver in a front-back direction of the straddled vehicle.

Accordingly, it is easy that the inner louver receives air from an area outward thereof in the transverse direction. Consequently, it is easy to increase an amount of air that the inner louver receives. It is easy to increase an amount of air that the inner louver guides to the radiator. Therefore, it is easy to increase a supply amount of air to a region of the radiator close to the inner louver. This results in easy supply of air evenly throughout the radiator.

It is preferred in the straddled vehicle described above that the front end of the inner louver is located more forward than the front end of the outer louver.

Accordingly, it is much easier to increase an amount of air that the inner louver guides to the radiator.

It is preferred in the straddled vehicle described above that the louvers each have an inclination angle with respect to the front-back direction of the straddled vehicle, and that the inclination angle of the first louver is equal to or smaller than the inclination angles of the louvers other than the first louver.

Accordingly, it is easy that the first louver receives air from an area in front thereof. Therefore, it is much easier to increase an amount of air that the first louver guides to the radiator.

It is preferred in the straddled vehicle described above that the inclination angles of the louvers other than the first louver are equal to one another.

Accordingly, it is easy to make a simple shape of the louvers other than the first louver. Consequently, it is easy to form the radiator grille.

It is preferred in the straddled vehicle described above that, when it is assumed that one of two louvers adjacent in the transverse direction and close to the vehicle center plane is an inner louver and the other is an outer louver, the inner louver has an inclination angle with respect to the front-back direction of the straddled vehicle and the outer louver has an inclination angle with respect to the front-back direction, and the inclination angle of the inner louver is equal to or smaller than the inclination angles of the outer louver.

Accordingly, it is easy that the inner louver receives air from an area in front thereof. Consequently, it is easy to increase an amount of air that the inner louver guides to the radiator. Therefore, it is easy to increase a supply amount of air to a region of the radiator close to the inner louver. This results in easy supply of air evenly throughout the radiator.

It is preferred in the straddled vehicle described above that the inclination angle of the inner louver is smaller than the inclination angle of the outer louver.

Accordingly, it is much easier to increase an amount of air that the inner louver guides to the radiator.

It is preferred in the straddled vehicle described above that, when it is assumed that the louver outward of the first louver in the transverse direction and closest to the first louver is a second louver, the first louver includes a front end and a rear end, and the second louver includes a front end and a rear end, that a separation distance between the front end of the first louver and the front end of the second louver is equal to or larger than a separation distance between the rear end of the first louver and the rear end of the second louver.

The first louver and the second louver form a first gap between the first louver and the second louver. The first louver and the second louver form an inlet of the first gap between the front end of the first louver and the front end of the second louver. The first louver and the second louver form an outlet of the first gap between the rear end of the first louver and the rear end of the second louver. Air flows into the first gap through the inlet of the first gap. Air flows from the inlet of the first gap to the outlet of the first gap. The separation distance between the front end of the first louver and the front end of the second louver is equal to or larger than the separation distance between the rear end of the first louver and the rear end of the second louver. Accordingly, the outlet of the first gap is equal or narrower than the inlet of the first gap. Consequently, it is easy to make an air speed at the outlet of the first gap equal to or larger than an air speed at the inlet of the first gap. Therefore, it is easy to increase an amount of air passing through the first gap. An amount of air passing through the first gap corresponds to an amount of air that the first louver guides to the radiator. This results in easy supply of air evenly throughout the radiator.

It is preferred in the straddled vehicle described above that a distance in the transverse direction between the front end of the first louver and the front end of the second louver is equal to or larger than a distance in the transverse direction between the rear end of the first louver and the rear end of the second louver.

Accordingly, it is easy that air enters from an area in front of the first gap into the first gap. Therefore, it is much easier to increase an amount of air passing through the first gap. That is, it is much easier to increase an amount of air that the first louver guides to the radiator.

It is preferred in the straddled vehicle described above that the rear end of the first louver is located at a position equal to or more forward than the rear end of the second louver in the front-back direction of the straddled vehicle.

Accordingly, the first louver is not excessively long. The first louver has a length between the front end and the rear end of the first louver. Consequently, the first louver is hard to interfere with other parts.

It is preferred in the straddled vehicle described above that the rear end of the first louver is located more forward than the rear end of the second louver.

Accordingly, it is easy to make the first louver short. Consequently, the first louver is much harder to interfere with other parts.

It is preferred in the straddled vehicle described above that, when it is assumed that the louver outward of the second louver in the transverse direction and closest to the second louver is a third louver, a first gap between the first louver and the second louver is equal to or larger than a second gap between the second louver and the third louver.

Therefore, it is much easier to increase an amount of air passing through the first gap.

It is preferred in the straddled vehicle described above that the third louver includes a front end, and a separation distance between the front end of the first louver and the front end of the second louver is equal to or larger than a separation distance between the front end of the second louver and the front end of the third louver.

The first louver and the second louver form an inlet of the first gap between the front end of the first louver and the front end of the second louver. The second louver and the third louver form an inlet of the second gap between the front end of the second louver and the front end of the third louver. The separation distance between the front end of the first louver and the front end of the second louver is equal to or larger than the separation distance between the front end of the second louver and the front end of the third louver. Accordingly, the inlet of the first gap is equal or wider than the inlet of the second gap. Therefore, it is easy to increase an amount of air entering the first gap. Therefore, it is easy to increase an amount of air passing through the first gap.

It is preferred in the straddled vehicle described above that a distance in the transverse direction between the front end of the first louver and the front end of the second louver is equal to or larger than a distance in the transverse direction between the front end of the second louver and the front end of the third louver.

Accordingly, it is easy that air enters from an area in front of the first gap into the first gap. Therefore, it is much easier to increase an amount of air passing through the first gap.

It is preferred in the straddled vehicle described above that the third louver has a rear end, and that the rear end of the third louver is located at a position equal to the rear end of the second louver in the front-back direction of the straddled vehicle.

Accordingly, it is easy to make a simple shape of the second louver and the third louver. It is easy to make a distance between the rear end of the second louver and the radiator equal to a distance between the rear end of the third louver and the radiator.

It is preferred in the straddled vehicle described above that, when it is assumed that the louver outward of the third louver in the transverse direction and closest to the third louver is a fourth louver, the second gap between the second louver and the third louver is equal to or larger than a third gap between the third louver and the fourth louver.

Therefore, it is easy to increase an amount of air passing through the second gap. Consequently, it is easy to increase a supply amount of air to a region of the radiator close to the second gap. Therefore, it is easy to make even supply of air throughout the radiator.

It is preferred in the straddled vehicle described above that the second gap has a dimension substantially equal to a dimension of the third gap.

Accordingly, it is easy to make a simple shape of the second gap and the third gap. Consequently, it is easy to make a simple shape of the second louver, the third louver and the fourth louver. Therefore, it is easy to form the radiator grille.

It is preferred in the straddled vehicle described above that the fourth louver includes a front end, and a separation distance between the front end of the second louver and the front end of the third louver is equal to or larger than a separation distance between the front end of the third louver and the front end of the fourth louver.

The second louver and the third louver form an inlet of second gap between the front end of the second louver and the front end of the third louver. The third louver and the fourth louver form an inlet of the third gap between the front end of the third louver and the front end of the fourth louver. The separation distance between the front end of the second louver and the front end of the third louver is equal to or larger than the separation distance between the front end of the third louver and the front end of the fourth louver. Accordingly, the inlet of the second gap is equal or wider than the inlet of the third gap. Consequently, it is easy to increase an amount of air entering the second gap. Therefore, it is much easier to increase an amount of air passing through the second gap.

It is preferred in the straddled vehicle described above that a distance in the transverse direction between the front end of the second louver and the front end of the third louver is equal to or larger than a distance in the transverse direction between the front end of the third louver and the front end of the fourth louver.

Accordingly, it is easy that air enters from an area in front of the second gap into the second gap. Therefore, it is much easier to increase an amount of air passing through the second gap.

It is preferred in the straddled vehicle described above that the fourth louver has a rear end, and that the rear end of the fourth louver is located at a position equal to the rear end of the third louver in the front-back direction of the straddled vehicle.

Accordingly, it is easy to make a simple shape of the third louver and the fourth louver. It is easy to make a distance between the rear end of the third louver and the radiator equal to a distance between the rear end of the fourth louver and the radiator.

It is preferred in the straddled vehicle described above that the radiator has at least a left part and a right part, the left part being located leftward of the vehicle center plane and the right part being located rightward of the vehicle center plane.

It is easy to supply air evenly throughout the radiator even when the radiator has at least one of the left part and the right part.

It is preferred in the straddled vehicle described above that the radiator includes an upper tank, a lower tank located below the upper tank, and a plurality of pipes extending from the upper tank to the lower tank, and that the pipes are lined in the transverse direction.

As described above, it is easy to make distribution of an amount of air, supplied to the radiator, even in the transverse direction. Accordingly, it is easy to make even cooling performance of the pipes even when the pipes are lined in the transverse direction. The effect of the straddled vehicle is significant when the pipes are lined in the transverse direction.

It is preferred in the straddled vehicle described above that the left shroud has a left bulge extending forward and leftward from the radiator grille, and that the right shroud has a right bulge extending forward and rightward from the radiator grille.

The left shroud includes the left bulge. The left bulge extends forward and leftward from the radiator grille. Accordingly, the left bulge guides air from an area, more forward and leftward than the radiator grille, to the radiator grille. As described above, the first louver projects more forward than the louvers other than the first louver. As a result, the first louver easily receives air from the area more forward and leftward than the radiator grille. Likewise, the right shroud includes the right bulge. The right bulge extends forward and rightward from the radiator grille. Accordingly, the right bulge guides air from an area, more forward and rightward than the radiator grille, to the radiator grille. As described above, the first louver projects more forward than the louvers other than the first louver. As a result, the first louver easily receives air from the area more forward and rightward than the radiator grille.

It is preferred in the straddled vehicle described above that the louvers each extend forward and outward in the transverse direction from the radiator in plan view of the straddled vehicle.

Accordingly, the louvers each guide air to the radiator easily. Moreover, the louvers easily protect the radiator from stepping stones or the like sprang up by the front wheel.

It is preferred in the straddled vehicle described above that the radiator has a front face and that the first louver is closer to perpendicular to the front face of the radiator than the louvers other than the first louver.

Accordingly, it is easy that the first louver receives air from an area in front thereof. Therefore, it is much easier to increase an amount of air that the first louver guides to the radiator.

### Advantageous Effects of Invention

With the straddled vehicle according to the present invention, air can be supplied evenly throughout the radiator.

### Brief Description of Drawings

Fig. 1 is a left side view of a straddled vehicle according to an embodiment.
Fig. 2 is a front view of a radiator.
Fig. 3 is a front view of a radiator grille.
Fig. 4 is a sectional view taken on line IV-IV of Fig. 1.
Fig. 5 is an enlarged view of the radiator grille.
Fig. 6 is another enlarged view of the radiator grille.
Fig. 7 is another enlarged view of the radiator grille.
Fig. 8 is another enlarged view of the radiator grille.
Fig. 9 is an enlarged view of a radiator grille according to one modification.
Fig. 10 is an enlarged view of a radiator grille according to another modification.
Fig. 11 is an enlarged view of a radiator grille according to another modification.
Fig. 12 is an enlarged view of a radiator grille according to another modification.
Fig. 13 is an enlarged view of a radiator grille according to another modification.

### Description of Embodiments

A straddled vehicle according to the present teaching will be described hereinafter with reference to the drawings.

### 1. Outline construction of straddled vehicle 1

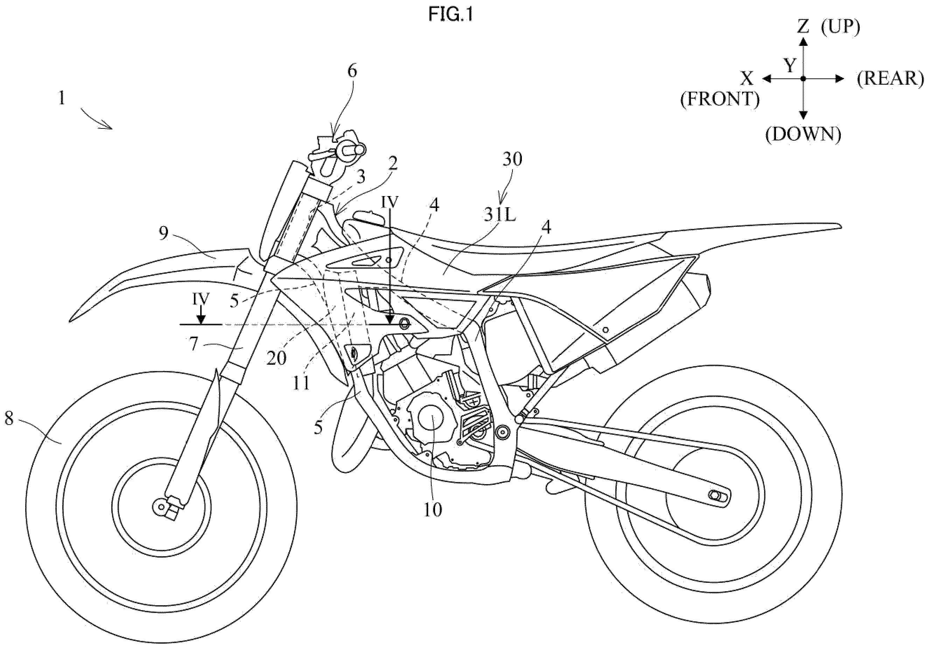

Fig. 1 is a left side view of a straddled vehicle 1 according to an embodiment. Description is made of an outline construction of the straddled vehicle 1.

Fig. 1 shows a front-back direction X, a transverse direction Y, and an up-down direction Z of the straddled vehicle 1. The front-back direction X, transverse direction Y, and up-down direction Z are defined with reference to a driver (also called a rider) riding on the straddled vehicle 1. The front-back direction X, transverse direction Y, and up-down direction Z are perpendicular to one another. The front-back direction X and transverse direction Y are horizontal. The up-down direction Z is vertical.

The terms "forward", "rearward", "upward", "downward", "rightward", and "leftward", respectively, mean "forward", "rearward", "upward", "downward", "rightward", and "leftward" as seen from the driver riding on the straddled vehicle 1. Unless otherwise stated in this specification, "forward" and "rearward" include not only directions parallel to the front-back direction X but also directions close to the front-back direction X. The directions close to the front-back direction X are, for example, directions at angles not exceeding 45 degrees to the front-back direction X. Similarly, unless otherwise specified, "rightward" and "leftward" include not only directions parallel to the transverse direction Y but also directions close to the transverse direction Y. Unless otherwise specified, "upward" and "downward" include not only directions parallel to the up-down direction Z but also directions close to the up-down direction Z. For reference, the drawings show the terms FRONT, REAR, UP, DOWN, RIGHT, and LEFT, as appropriate.

In the present specification, the language "in side view of the straddled vehicle 1" is referred to as "in side view of the vehicle", as appropriate. The language "in plan view of the straddled vehicle 1" is referred to as "in plan view of the vehicle", as appropriate.

The straddled vehicle 1 includes a vehicle body frame 2. The vehicle body frame 2 includes a head tube 3, a main frame 4, and a down frame 5. The head tube 3 is located on a front end of the vehicle body frame 2. The main frame 4 is connected to the head tube 3. The main frame 4 extends rearward and downward from the head tube 3 in side view of the vehicle. The down frame 5 is located below the main frame 4 in side view of the vehicle. The down frame 5 extends rearward and downward from the head tube 3 in side view of the vehicle. A rear part of the main frame 4 is connected to a rear part of the down frame 5.

The straddled vehicle 1 includes a steering device 6. The steering device 6 is supported by the vehicle body frame 2. The steering device 6 is supported by the head tube 3. The steering device 6 is rotatable relative to the vehicle body frame 2. The steering device 6 is rotatable relative to the head tube 3.

The steering device 6 includes a front fork 7. The front fork 7 is supported by the head tube 3. The front fork 7 extends forward and downward from the head tube 3 in side view of the vehicle.

The straddled vehicle 1 includes a front wheel 8 and a front fender 9. The front wheel 8 is supported by the front fork 7. The front wheel 8 is supported on a lower end of the front fork 7. The front wheel 8 is rotatable relative to the front fork 7. The front fender 9 is located above the front wheel 8. The front fender 9 is located below the head tube 3. The front fender 9 is supported by the front fork 7. With a rotation of the steering device 6 relative to the vehicle body frame 2, directions of the front wheel 8 and the front fender 9 change.

The straddled vehicle 1 includes an engine 10. The engine 10 is supported by the vehicle body frame 2. The engine 10 is located below the main frame 4. The engine 10 is located above the down frame 5. The engine 10 is a water-cooled engine.

The straddled vehicle 1 includes a radiator 11. The radiator 11 is located more forward than the engine 10. The radiator 11 is located higher than the engine 10. The radiator 11 is connected to the engine 10 via a pipe for cooling water not shown. The cooling water circulates between the radiator 11 and the engine 10. The radiator 11 cools the cooling water. The cooling water cools the engine 10.

The radiator 11 is located more rearward than the head tube 3. The radiator 11 is located lower than the main frame 4. The radiator 11 is located higher than the down frame 5. The radiator 11 is located rearward of the front fork 7. The radiator 11 is located rearward of the front fender 9.

The straddled vehicle 1 includes a radiator grille 20. The radiator grille 20 is located forward of the radiator 11. The radiator grille 20 supplies air to the radiator 11. Air passes through the radiator grille 20, and then passes through the radiator 11.

The radiator grille 20 is located more rearward than the head tube 3. The radiator grille 20 is located lower than the main frame 4. The radiator grille 20 is located higher than the down frame 5. The radiator grille 20 is located rearward of the front fork 7. The radiator grille 20 is located rearward of the front fender 9. The radiator grille 20 is located more forward than the engine 10. The radiator grille 20 is located higher than the engine 10.

The straddled vehicle 1 includes a shroud 30. The shroud 30 is sometimes called a cover. The shroud 30 overlaps the vehicle body frame 2 at least partially in side view of the vehicle. The shroud 30 is located higher than the front wheel 8. The shroud 30 is located higher than the engine 10. The shroud 30 overlaps the vehicle radiator 11 at least partially in side view of the vehicle. The shroud 30 overlaps the vehicle radiator grille 20 at least partially in side view of the vehicle.

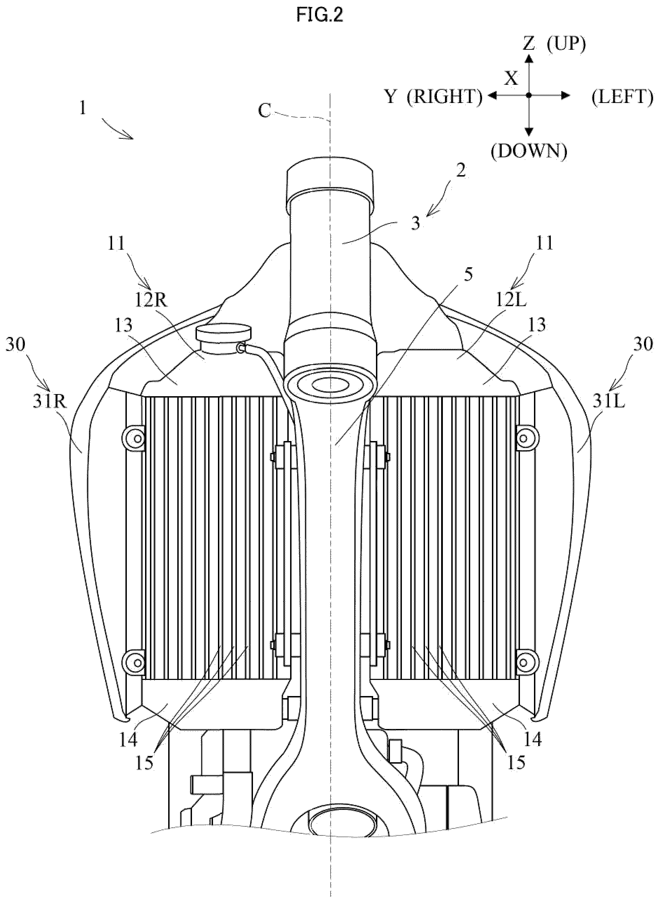

Fig. 2 is a front view of the radiator 11. Fig. 2 shows a vehicle center plane C. The vehicle center plane C is a virtual plane. The vehicle center plane C passes the center of the head tube 3. The vehicle center plane C is perpendicular to the transverse direction Y.

The down frame 5 is located on the vehicle center plane C.

The radiator 11 is located below the head tube 3. The radiator 11 is located at the same level as the down frame 5.

The shroud 30 includes a left shroud 31L and a right shroud 31R. The left shroud 31L is located leftward of the vehicle center plane C. The left shroud 31L is located leftward of the down frame 5. The right shroud 31R is located rightward of the left shroud 31L. The right shroud 31R is located rightward of the vehicle center plane C. The right shroud 31R is located rightward of the down frame 5.

The radiator 11 is arranged between the left shroud 31L and the right shroud 31R. The radiator 11 is located rightward of the left shroud 31L. The radiator 11 is located leftward of the right shroud 31R.

The radiator 11 extends in the transverse direction Y. The radiator 11 extends from a position leftward of the vehicle center plane C to a position rightward of the vehicle center plane C. The radiator 11 extends from a position more leftward than the down frame 5 to a position more rightward than the down frame 5.

The radiator 11 has a left part 12L and a right part 12R. The left part 12L is located leftward of the vehicle center plane C. The right part 12R is located rightward of the vehicle center plane C.

The left part 12L is located more leftward than the down frame 5. The right part 12R is located more rightward than the down frame 5.

The following describes a configuration of the radiator 11. The radiator 11 includes an upper tank 13 and a lower tank 14. The upper tank 13 is located on an upper portion of the radiator 11. The lower tank 14 is located below the upper tank 13. The radiator 11 includes a plurality of pipes 15. The pipes 15 extend from the upper tank 13 to the lower tank 14. The pipes 15 are lined in the transverse direction Y. Air passes between adjacent pipes 15. The pipes 15 are connected to the upper tank 13 in parallel to one another. The pipes 15 are connected to the lower tank 14 in parallel to one another. Cooling water flows from the upper tank 13 to the lower tank 14 through the pipes 15. The pipes 15 each cool the cooling water.

The right part 12R has a common configuration to that of the left part 12L. The left part 12L and the right part 12R each include the upper tank 13, the lower tank 14, and the pipes 15. For example, the left part 12L and the right part 12R are symmetrical in shape with respect to the vehicle center plane C.

Reference is made to Fig. 1. The left shroud 31L is located higher than the front wheel 8. The right shroud 31R is located higher than the front wheel 8, which illustration is omitted.

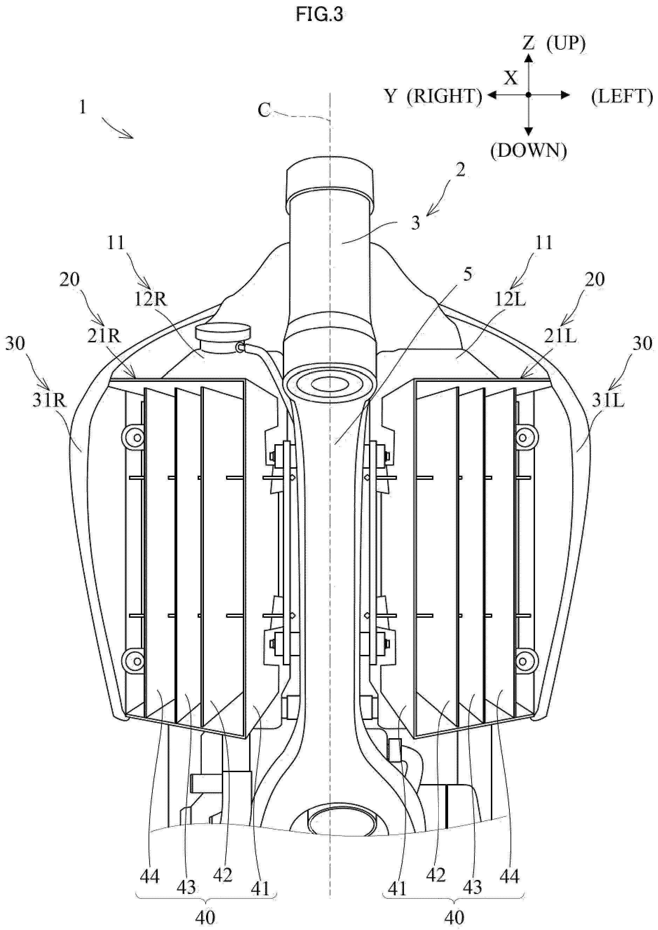

Fig. 3 is a front view of the radiator grille 20. The radiator grille 20 is located below the head tube 3. The radiator grille 20 is located at the same level as the down frame 5.

The radiator grille 20 is arranged between the left shroud 31L and the right shroud 31R. The radiator grille 20 is located rightward of the left shroud 31L. The radiator grille 20 is located leftward of the right shroud 31R.

The radiator grille 20 extends in the transverse direction Y. The radiator grille 20 extends from a position leftward of the vehicle center plane C to a position rightward of the vehicle center plane C. The radiator grille 20 extends from a position more leftward than the down frame 5 to a position more rightward than the down frame 5.

The radiator grille 20 includes a left radiator grille 21L and a right radiator grille 21R. The left radiator grille 21L is located leftward of the vehicle center plane C. The right radiator grille 21R is located rightward of the vehicle center plane C.

The left radiator grille 21L is located more leftward than the down frame 5. The right radiator grille 21R is located more rightward than the down frame 5.

The following describes a configuration of the radiator grille 20. The radiator grille 20 includes a plurality of louvers 40. For example, the radiator grille 20 includes eight louvers 40. The louvers 40 are lined in the transverse direction Y.

It is assumed that, among all the louvers, a louver 40 closest to the vehicle center plane C is a first louver 41.

A direction of the transverse direction Y approaching the vehicle center plane C is referred to as "inward in the transverse direction Y". A direction of the transverse direction Y away from the vehicle center plane C is referred to as "outward in the transverse direction Y".

It is assumed that a louver 40 outward of the first louver 41 in the transverse direction Y and closest to the first louver 41 is a second louver 42. It is assumed that a louver 40 outward of the second louver 42 in the transverse direction Y and closest to the second louver 42 is a third louver 43. It is assumed that a louver 40 outward of the third louver 43 in the transverse direction Y and closest to the third louver 43 is a fourth louver 44.

The right radiator grille 21R has a common configuration to that of the left radiator grille 21L. For example, the left radiator grille 21L includes four louvers 40. The right radiator grille 21R includes four louvers 40. For example, the left radiator grille 21L and the right radiator grille 21R are symmetrical in shape with respect to the vehicle center plane C.

The left radiator grille 21L includes a first set of louvers 40. The first set is formed by a first louver 41, a second louver 42, a third louver 43, and a fourth louver 44. The right radiator grille 21R includes a second set of louvers 40. The second set is formed by a first louver 41, a second louver 42, a third louver 43, and a fourth louver 44, which louvers are different from those of the first set.

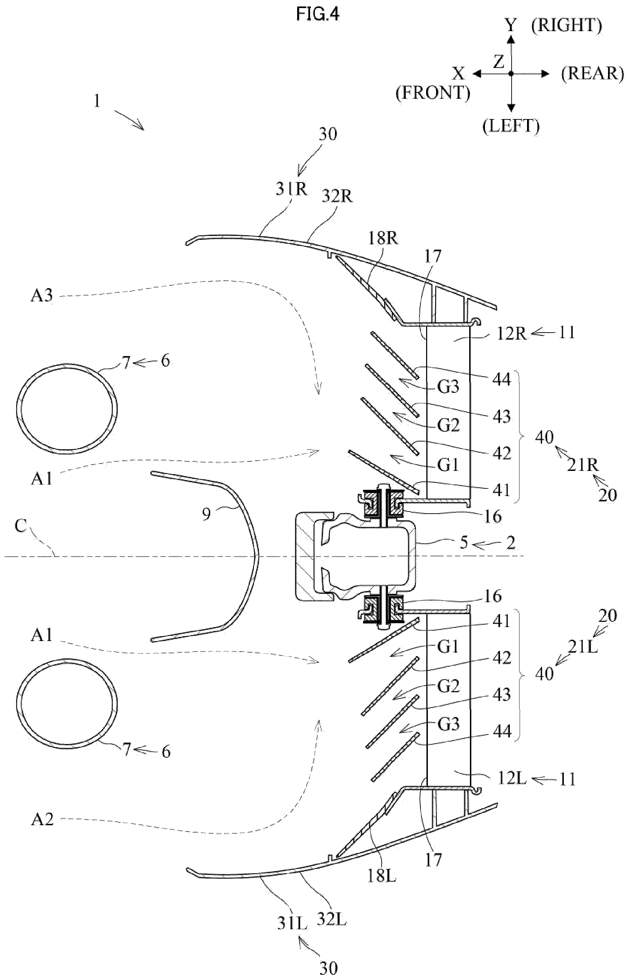

Fig. 4 is a sectional view taken on line IV-IV of Fig. 1.

The left part 12L and the right part 12R of the radiator 11 are separated from each other. The right part 12R is separated from the left part 12L.

The radiator 11 is located rearward of the down frame 5. The left part 12L is located rearward and leftward of the down frame 5. The right part 12R is located rearward and rightward of the down frame 5.

The radiator 11 is supported by the down frame 5 via a supporting portion 16. The right part 12R is supported by the down frame 5 via the supporting portion 16. The left part 12L is supported by the down frame 5 via the supporting portion 16.

The radiator 11 is located rearward of the front fork 7. The left part 12L is located rearward of the front fork 7. The right part 12R is located rearward of the front fork 7.

The radiator grille 20 is located rearward of the front fork 7. The left radiator grille 21L is located rearward of the front fork 7. The right radiator grille 21R is located rearward of the front fork 7.

The radiator grille 20 is located forward of the radiator 11. The left radiator grille 21L is located forward of the left part 12L. The right radiator grille 21R is located forward of the right part 12R.

The radiator 11 has a front face 17. The front face 17 is substantially perpendicular to the front-back direction X. The radiator grille 20 is mounted on the front face 17 of the radiator 11. The left radiator grille 21L is mounted on the front face 17 of the left part 12L. The right radiator grille 21R is mounted on the front face 17 of the right part 12R.

The louvers 40 are located forward of the radiator 11. The louvers 40 are located forward of the front face 17.

The louvers 40 each extend forward and outward in the transverse direction Y from the radiator 11 in plan view of the vehicle. The louvers 40 each extend forward and outward in the transverse direction Y from the front face 17 in plan view of the vehicle.

The first louver 41 and the second louver 42 form a first gap G1 between the first louver 41 and the second louver 42. The second louver 42 and the third louver 43 form a second gap G2 between the second louver 42 and the third louver 43. The third louver 43 and the fourth louver 44 form a third gap G3 between the third louver 43 and the fourth louver 44.

The left shroud 31L is located leftward of the front fork 7. The right shroud 31R is located rightward of the front fork 7.

The left shroud 31L has a left bulge 32L. The left bulge 32L is located more leftward than the radiator grille 20. The left bulge 32L extends forward and leftward from the radiator grille 20. The left bulge 32L forms an area more forward and leftward than the radiator grille 20. The left bulge 32L guides air from the area, more forward and leftward than the radiator grille 20, to the radiator grille 20.

The right shroud 31R has a right bulge 32R. The right bulge 32R is located more rightward than the radiator grille 20. The right bulge 32R extends forward and rightward from the radiator grille 20. The right bulge 32R forms an area more forward and rightward than the radiator grille 20. The right bulge 32R guides air from the area, more forward and rightward than the radiator grille 20, to the radiator grille 20.

Although not shown, the radiator grille 20 overlaps the left bulge 32L in side view of the vehicle. The radiator grille 20 overlaps the right bulge 32R in side view of the vehicle.

The straddled vehicle 1 includes a left guide plate 18L. The left guide plate 18L is arranged at a gap between the radiator 11 and the left shroud 31L. The left guide plate 18L extends from the left part 12L to the left bulge 32L. For example, the left guide plate 18L extends forward and leftward from the radiator 11 in plan view of the vehicle. The left guide plate 18L closes the gap between the radiator 11 and the left shroud 31L. Moreover, the left guide plate 18L guides air from the area, more forward and leftward than the radiator grille 20, to the radiator grille 20.

Likewise, the straddled vehicle 1 includes a right guide plate 18R. The right guide plate 18R is arranged at a gap between the radiator 11 and the right shroud 31R. The right guide plate 18R extends from the right part 12R to the right bulge 32R. For example, the right guide plate 18R extends forward and rightward from the radiator 11 in plan view of the vehicle. The right guide plate 18R closes the gap between the radiator 11 and the right shroud 31R. Moreover, the right guide plate 18R guides air from the area, more forward and rightward than the radiator grille 20, to the radiator grille 20.

While the straddled vehicle 1 travels, air flows rearward in the shroud 30. First airflow A1, second airflow A2, and third airflow A3 are generated within the shroud 30. The first airflow A1 passes rearward through a gap between the front fork 7 and the front fender 9. The second airflow A2 passes rearward through a gap between the front fork 7 and the left shroud 31L. Then, the second airflow A2 flows along the left bulge 32L. The second airflow A2 flows rearward and leftward, and then flows rearward and rightward. The third airflow A3 passes rearward through a gap between the front fork 7 and the right shroud 31R. Then, the third airflow A3 flows along the right bulge 32R. The third airflow A3 flows rearward and rightward, and then flows rearward and leftward.

The first airflow A1, the second airflow A2, and the third airflow A3 flow into the radiator grille 20. The first airflow A1 flows from an area in front of the radiator grille 20 into the radiator grille 20. The second airflow A2 flows from an area, more forward and leftward than the radiator grille 20, into the radiator grille 20. The third airflow A3 flows from an area, more forward and rightward than the radiator grille 20, into the radiator grille 20.

The radiator grille 20 receives the first airflow A1, the second airflow A2, and the third airflow A3. Specifically, the louvers 40 each receive either the second airflow A2 or the third airflow A3. Moreover, at least any of the louvers 40 receives the first airflow A1.

The first airflow A1, the second airflow A2, and the third airflow A3 pass through the radiator grille 20. The first airflow A1, the second airflow A2, and the third airflow A3 pass through the first gap G1, the second gap G2, and the third gap G3. Then, the first airflow A1, the second airflow A2, and the third airflow A3 pass through the radiator 11.

The following describes how the louvers 40 each receive air.

For example, the first louver 41 receives air from an area outward thereof in the transverse direction Y. The first louver 41 takes air from the area outward thereof in the transverse direction Y. In addition, the first louver 41 may receive air from an area in front thereof. The first louver 41 guides air to the radiator 11. Specifically, air flows into the first gap G1. Air flows through the first gap G1. Air flows from the first gap G1 into the radiator 11. Air flows into a part of the radiator 11 rearward of the first gap G1.

Likewise, the second louver 42 receives air from an area outward thereof in the transverse direction Y. In addition, the second louver 42 may receive air from an area in front thereof. The second louver 42 guides air to the radiator 11. Specifically, air flows into the second gap G2. Air flows through the second gap G2. Air flows from the second gap G2 into the radiator 11. Air flows into a part of the radiator 11 rearward of the second gap G2.

The third louver 43 receives air from an area outward thereof in the transverse direction Y. In addition, the third louver 43 may receive air from an area in front thereof. The third louver 43 guides air to the radiator 11. Specifically, air flows into the third gap G3. Air flows through the third gap G3. Air flows from the third gap G3 into the radiator 11. Air flows into a part of the radiator 11 rearward of the third gap G3.

The fourth louver 44 receives air from an area outward thereof in the transverse direction Y. In addition, the fourth louver 44 may receive air from an area in front thereof. The fourth louver 44 guides air to the radiator 11.

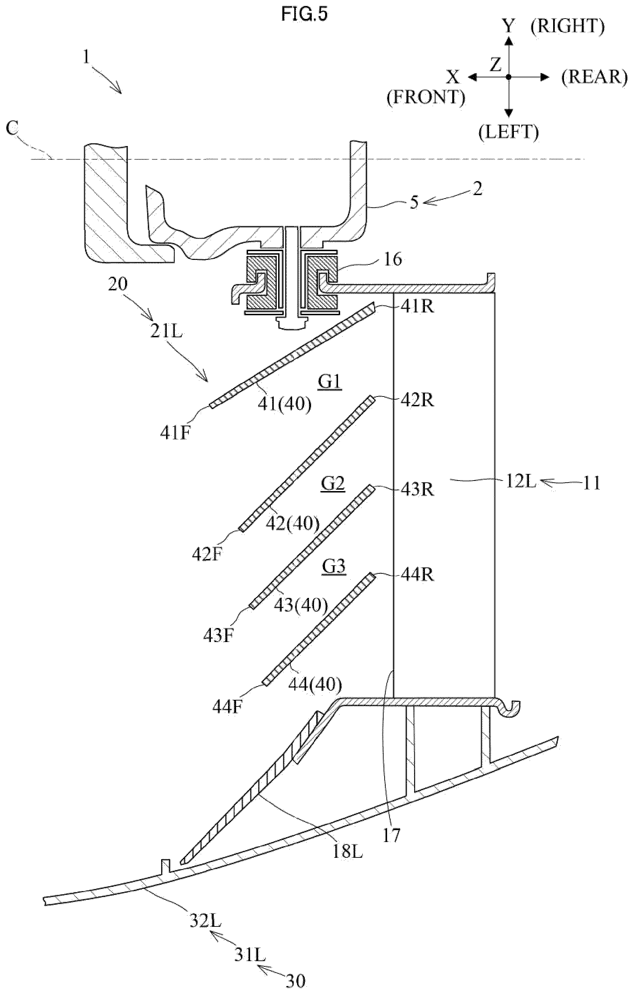

Fig. 5 is an enlarged view of the radiator grille 20. Detailed description is made of the shape of the radiator grille 20 taking the left radiator grille 21L as one example for convenience.

The first louver 41 projects more forward than the louvers 40 other than the first louver 41. The first louver 41 projects more forward than any of the second louver 42, the third louver 43, and the fourth louver 44.

The first louver 41 has a front end 41F. The front end 41F is positioned more forward than front ends of the louvers 40 other than the first louver 41. The second louver 42 has a front end 42F. The third louver 43 has a front end 43F. The fourth louver 44 has a front end 44F. The front end 41F is positioned more forward than any of the front ends 42F, 43F, and 44F.

The front end 42F is positioned more forward than the front end 43F. The front end 43F is positioned more forward than the front end 44F.

It is assumed that one of two louvers 40 adjacent in the transverse direction Y that is closer to the vehicle center plane C is an inner louver and the other of the two louvers 40 is an outer louver. The front end of the inner louver is located more forward than the front end of the outer louver.

For example, if the inner louver is the first louver 41, the outer louver is the second louver 42. For example, if the inner louver is the second louver 42, the outer louver is the third louver 43. For example, if the inner louver is the third louver 43, the outer louver is the fourth louver 44.

For example, the inner louver is the first louver 41 and the outer louver is the second louver 42. In this case, the front end of the inner louver is positioned more forward than the front end of the outer louver. Specifically, the front end 41F is positioned more forward than the front end 42F.

For example, the inner louver is the second louver 42 and the outer louver is the third louver 43. In this case, the front end of the inner louver is positioned more forward than the front end of the outer louver. Specifically, the front end 42F is positioned more forward than the front end 43F.

For example, the inner louver is the third louver 43 and the outer louver is the fourth louver 44. In this case, the front end of the inner louver is positioned more forward than the front end of the outer louver. Specifically, the front end 43F is positioned more forward than the front end 44F.

The first louver 41 has a rear end 41R. The rear end 41R is located more rearward than the front end 41F. The rear end 41R is located more rearward than the front end 42F.

The second louver 42 has a rear end 42R. The rear end 41R of the first louver 41 is located at the same position as the rear end 42R of the second louver 42 in the front-back direction X.

The third louver 43 has a rear end 43R. The rear end 43R is located at the same position as the rear end 42R in the front-back direction X.

The fourth louver 44 has a rear end 44R. The rear end 44R is located at the same position as the rear end 43R in the front-back direction X.

The first gap G1 is larger than the second gap G2.

The second gap G2 has a dimension substantially equal to a dimension of the third gap G3.

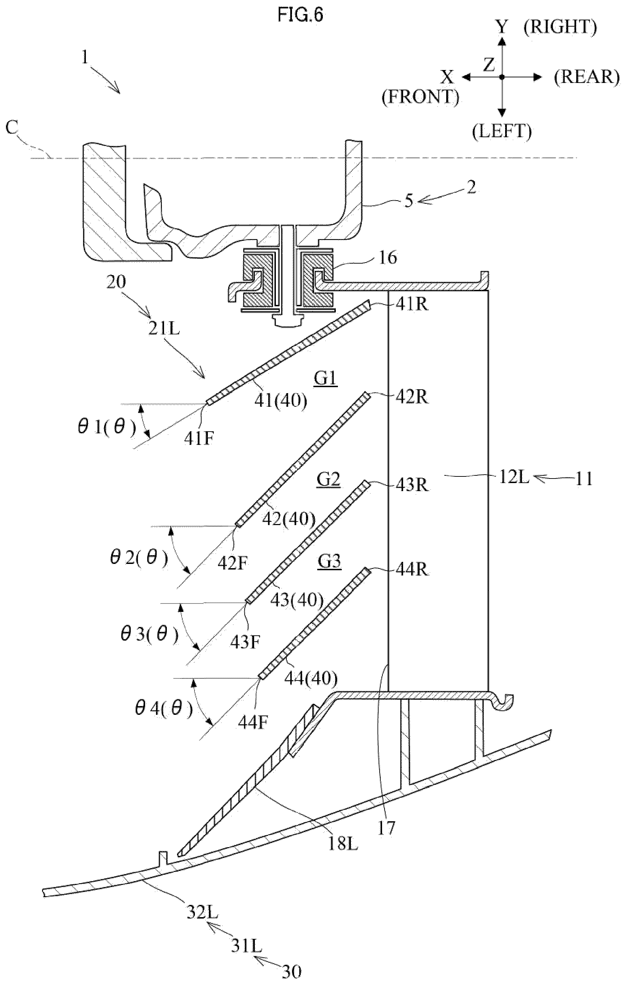

Fig. 6 is an enlarged view of the radiator grille 20. The louvers 40 each have an inclination angle θ with respect to the front-back direction X. The inclination angle θ is an acute intersection angle between the louver 40 and the front-back direction X. The first louver 41 has an inclination angle θ1 with respect to the front-back direction X. The inclination angle θ1 is smaller than the inclination angles θ of the louvers 40 other than the first louver 41.

The second louver 42 has an inclination angle θ2 with respect to the front-back direction X. The third louver 43 has an inclination angle θ3 with respect to the front-back direction X. The fourth louver 44 has an inclination angle θ4 with respect to the front-back direction X. The inclination angle θ1 is smaller than the inclination angle θ2. The inclination angle θ1 is smaller than the inclination angle θ3. The inclination angle θ1 is smaller than the inclination angle θ4.

The first louver 41 is closer to perpendicular to the front face 17 of the radiator 11 than the louvers 40 other than the first louver 41.

The inclination angles θ of the louvers 40 other than the first louver 41 are equal to one another. Specifically, the inclination angles θ2, 83, and θ4 are equal to one another.

The inclination angle θ of the inner louver is equal to or smaller than the inclination angle θ of the outer louver.

For example, the inner louver is the first louver 41 and the outer louver is the second louver 42. In this case, the inclination angle θ of the inner louver is smaller than the inclination angle θ of the outer louver. Specifically, the inclination angle θ1 is smaller than the inclination angle θ2.

For example, the inner louver is the second louver 42 and the outer louver is the third louver 43. In this case, the inclination angle θ of the inner louver is equal to the inclination angle θ of the outer louver. Specifically, the inclination angle θ2 is equal to the inclination angle θ3.

For example, the inner louver is the third louver 43 and the outer louver is the fourth louver 44. In this case, the inclination angle θ of the inner louver is equal to the inclination angle θ of the outer louver. Specifically, the inclination angle θ3 is equal to the inclination angle θ4.

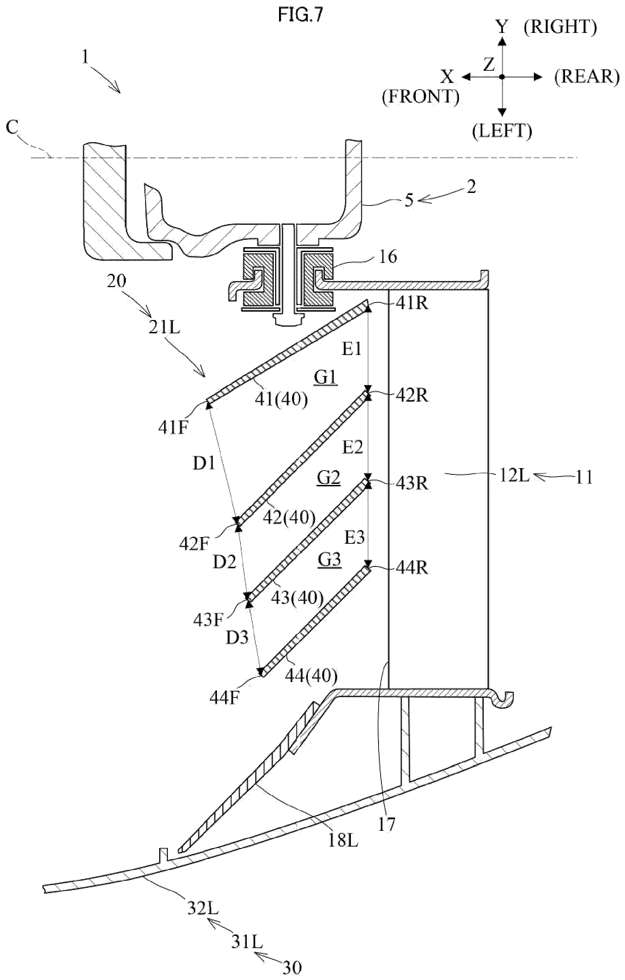

Fig. 7 is an enlarged view of the radiator grille 20. A separation distance D1 is a separation distance between the front end 41F and the front end 42F. A separation distance E1 is a separation distance between the rear end 41R and the rear end 42R. The separation distance D1 is larger than the separation distance E1.

A separation distance D2 is a separation distance between the front end 42F and the front end 43F. A separation distance E2 is a separation distance between the rear end 42R and the rear end 43R. The separation distance D2 is smaller than the separation distance E2.

A separation distance D3 is a separation distance between the front end 43F and the front end 44F. A separation distance E3 is a separation distance between the rear end 43R and the rear end 44R. The separation distance D3 is smaller than the separation distance E3.

The separation distance D1 is larger than the separation distance D2.

The separation distance D2 is equal to the separation distance D3.

The separation distance E1 is equal to the separation distance E2.

The separation distance E2 is equal to the separation distance E3.

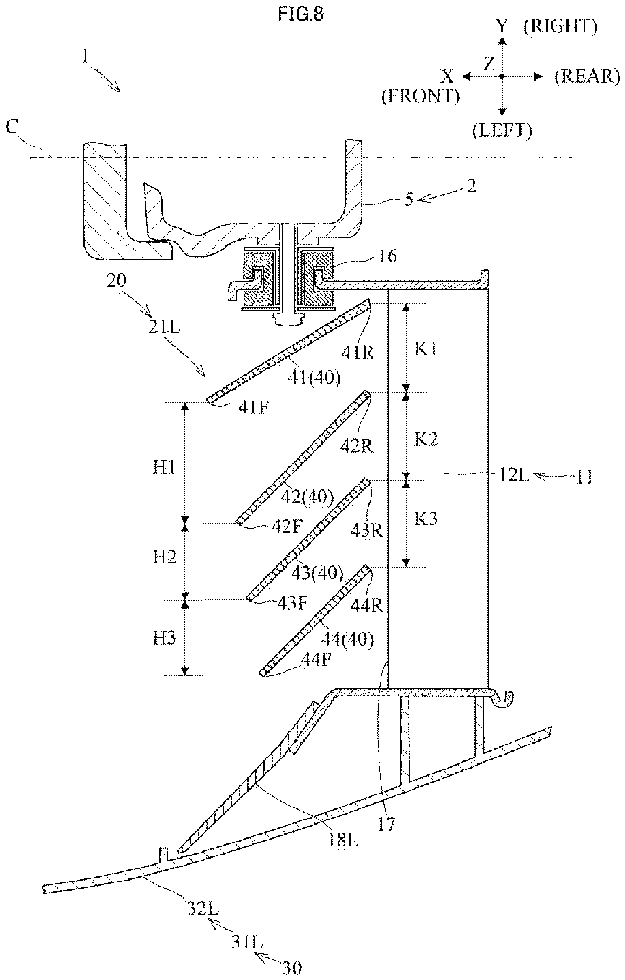

Fig. 8 is an enlarged view of the radiator grille 20. A distance H1 is a distance in the transverse direction Y between the front end 41F and the front end 42F. A distance K1 is a distance in the transverse direction Y between the rear end 41R and the rear end 42R. The distance H1 is larger than the distance K1.

A distance H2 is a distance in the transverse direction Y between the front end 42F and the front end 43F. A distance K2 is a distance in the transverse direction Y between the rear end 42R and the rear end 43R. The distance H2 is smaller than the distance K2.

A distance H3 is a distance in the transverse direction Y between the front end 43F and the front end 44F. A distance K3 is a distance in the transverse direction Y between the rear end 43R and the rear end 44R. The distance H3 is smaller than the distance K3.

The distance H1 is larger than the distance H2.

The distance H2 is equal to the distance H3.

The distance K1 is equal to the distance K2.

The distance K2 is equal to the distance K3.

### 2. Effect of the embodiment

The straddled vehicle 1 includes the front fork 7, the left shroud 31L, the right shroud 31R, the radiator 11, and the radiator grille 20. The left shroud 31L is located leftward of the front fork 7. The right shroud 31R is located rightward of the front fork 7. The radiator 11 is located rearward of the front fork 7. The radiator 11 is arranged between the left shroud 31L and the right shroud 31R. The radiator grille 20 is located rearward of the front fork 7. The radiator grille 20 is arranged between the left shroud 31L and the right shroud 31R. The radiator grille 20 is located forward of the radiator 11. The radiator grille 20 supplies air to the radiator 11. Air passes through the radiator grille 20, and then passes through the radiator 11.

The radiator grille 20 includes a plurality of louvers 40. The louvers 40 are lined in the transverse direction Y. The first louver 41 is closest to the vehicle center plane C among all the louvers 40. The vehicle center plane C is a virtual plane. The vehicle center plane C passes the center of the head tube 3. The vehicle center plane C is perpendicular to the transverse direction Y. The first louver 41 projects more forward than the louvers 40 other than the first louver 41. In other words, the front end 41F of the first louver 41 is positioned more forward than the front ends of the louvers 40 other than the first louver 41. Accordingly, it is easy that the first louver 41 receives air from an area outward thereof in the transverse direction Y. Therefore, it is easy to increase an amount of air that the first louver 41 receives. It is easy to increase an amount of air that the first louver 41 guides to the radiator 11. Therefore, it is easy to increase a supply amount of air to a region of the radiator 11 close to the first louver 41. This results in easy supply of air evenly throughout the radiator 11. Specifically, it is easy to make distribution of an amount of air, supplied to the radiator 11, even in the transverse direction Y.

The front end of the inner louver is located more forward than the front end of the outer louver. Accordingly, it is easy that the inner louver receives air from an area outward thereof in the transverse direction Y. Consequently, it is easy to increase an amount of air that the inner louver receives. It is easy to increase an amount of air that the inner louver guides to the radiator 11. Therefore, it is easy to increase a supply amount of air to a region of the radiator 11 close to the inner louver. This results in easy supply of air evenly throughout the radiator 11.

The inclination angle θ1 of the first louver 41 is smaller than the inclination angles θ of the louvers 40 other than the first louver 41. Accordingly, it is easy that the first louver 41 receives air from an area in front thereof. Therefore, it is much easier to increase an amount of air that the first louver 41 guides to the radiator 11.

The inclination angles θ of the louvers 40 other than the first louver 41 are equal to one another. Accordingly, it is easy to make a simple shape of the louvers 40 other than the first louver 41. Consequently, it is easy to form the radiator grille 20.

The inclination angle θ of the inner louver is equal to or smaller than the inclination angle θ of the outer louver. Accordingly, it is easy that the inner louver receives air from an area in front thereof. Accordingly, it is easy to increase an amount of air that the inner louver guides to the radiator 11. Therefore, it is easy to increase a supply amount of air to a region of the radiator 11 close to the inner louver. This results in easy supply of air evenly throughout the radiator 11.

The first louver 41 and the second louver 42 form the first gap G1 between the first louver 41 and the second louver 42. The first louver 41 and the second louver 42 form the inlet of the first gap G1 between the front end 41F and the front end 42F. The first louver 41 and the second louver 42 form the outlet of the first gap G1 between the rear end 41R and the rear end 42R. Air flows into the first gap G1 through the inlet of the first gap G1. Air flows from the inlet of the first gap G1 to the outlet of the first gap G1. Here, the separation distance D1 is larger than the separation distance E1. Accordingly, the outlet of the first gap G1 is narrower than the inlet of the first gap G1. With the Venturi effect, it is easy to make an air speed at the outlet of the first gap G1 larger than an air speed at the inlet of the first gap G1. Therefore, it is easy to increase an amount of air passing through the first gap G1. An amount of air passing through the first gap G1 corresponds to an amount of air that the first louver 41 guides to the radiator 11. This results in easy supply of air evenly throughout the radiator 11.

The distance H1 is larger than the distance K1. Accordingly, it is easy that air enters from an area in front of the first gap G1 into the first gap G1. Therefore, it is much easier to increase an amount of air passing through the first gap G1. That is, it is much easier to increase an amount of air that the first louver 41 guides to the radiator 11.

The rear end 41R of the first louver 41 is located at the same position as that of the rear end 42R of the second louver 42 in the front-back direction X. Accordingly, the first louver 41 is not excessively long. The first louver 41 has a length corresponding to a distance between the front end 41F and the rear end 41R. Consequently, the first louver 41 is hard to interfere with other parts. Examples of the other parts include a supporting portion 16.

The first gap G1 is larger than the second gap G2. Therefore, it is much easier to increase an amount of air passing through the first gap G1.

The first louver 41 and the second louver 42 form the inlet of the first gap G1 between the front end 41F and the front end 42F. The second louver 42 and the third louver 43 form an inlet of the second gap G2 between the front end 42F and the front end 43F. Here, the separation distance D1 is larger than the separation distance D2. Accordingly, the inlet of the first gap G1 is wider than the inlet of the second gap G2. Consequently, it is easy to increase an amount of air entering the first gap G1. Therefore, it is easy to increase an amount of air passing through the first gap G1.

The distance H1 is larger than the distance H2. Accordingly, it is easy that air enters from an area in front of the first gap G1 into the first gap G1. Therefore, it is much easier to increase an amount of air passing through the first gap G1.

The rear end 43R of the third louver 43 is located at the same position as the rear end 42R of the second louver 42 in the front-back direction X. Accordingly, it is easy to make a simple shape of the second louver 42 and the third louver 43. It is easy to make a distance between the rear end 42R and the radiator 11 equal to a distance between the rear end 43R and the radiator 11.

The second gap G2 has a dimension substantially equal to a dimension of the third gap G3. Accordingly, it is easy to make a simple shape of the second gap G2 and the third gap G3. Consequently, it is easy to make a simple shape of the second louver 42, the third louver 43 and the fourth louver 44. Therefore, it is easy to form the radiator grille 20.

The second louver 42 and the third louver 43 form the inlet of the second gap G2 between the front end 42F and the front end 43F. The third louver 43 and the fourth louver 44 form an inlet of the third gap G3 between the front end 43F and the front end 44F. Here, the separation distance D2 is equal to the separation distance D3. Accordingly, the inlet of the second gap G2 is as wide as the inlet of the third gap G3. Consequently, it is easy to increase an amount of air entering the second gap G2. Therefore, it is much easier to increase an amount of air passing through the second gap G2.

The distance H2 is equal to the distance H3. Accordingly, it is easy that air enters from an area in front of the second gap G2 into the second gap G2. Therefore, it is much easier to increase an amount of air passing through the second gap G2.

The rear end 44R of the fourth louver 44 is located at the same position as the rear end 43R of the third louver 43 in the front-back direction X. Accordingly, it is easy to make a simple shape of the third louver 43 and the fourth louver 44. It is easy to make a distance between the rear end 43R and the radiator 11 equal to a distance between the rear end 44R and the radiator 11.

As described above, the radiator 11 has the left part 12L and the right part 12R. According to the embodiment, it is easy to supply air evenly throughout the radiator 11 even when the radiator 11 has the left part 12L and the right part 12R.

The radiator 11 includes the upper tank 13, the lower tank 14, and a plurality of pipes 15. The lower tank 14 is located below the upper tank 13. The pipes 15 extend from the upper tank 13 to the lower tank 14. The pipes 15 are lined in the transverse direction Y. As described above, it is easy to make distribution of an amount of air, supplied to the radiator 11, even in the transverse direction Y in this embodiment. Accordingly, it is easy to make even cooling performance of the pipes 15 even when the pipes 15 are lined in the transverse direction Y. The effect of the straddled vehicle 1 is significant when the pipes 15 are lined in the transverse direction Y.

The left shroud 31L has the left bulge 32L. The left bulge 32L extends forward and leftward from the radiator grille 20. Accordingly, the left bulge 32L guides air from an area, more forward and leftward than the radiator grille 20, to the radiator grille 20. As described above, the first louver 41 projects more forward than the louvers 40 other than the first louver 41. As a result, the first louver 41 easily receives air from the area more forward and leftward than the radiator grille 20.

The right shroud 31R has the right bulge 32R. The right bulge 32R extends forward and rightward from the radiator grille 20. Accordingly, the right bulge 32R guides air from an area, more forward and rightward than the radiator grille 20, to the radiator grille 20. As described above, the first louver 41 projects more forward than the louvers 40 other than the first louver 41. As a result, the first louver 41 easily receives air from the area more forward and rightward than the radiator grille 20.

The louvers 40 each extend forward and outward in the transverse direction Y from the radiator 11 in plan view of the vehicle. Accordingly, the louvers 40 each guide air to the radiator 11 easily. Moreover, the louvers 40 easily protect the radiator 11 from stepping stones or the like sprang up by the front wheel 8.

The first louver 41 is closer to perpendicular to the front face 17 of the radiator 11 than the louvers 40 other than the first louver 41. Accordingly, it is easy that the first louver 41 receives air from an area in front thereof. Therefore, it is much easier to increase an amount of air that the first louver 41 guides to the radiator 11.

### 3. Modifications

(1) In the embodiment described above, the inclination angles θ of the louvers 40 other than the first louver 41 are equal to one another. Alternatively, another relationship among the inclination angles θ of the louvers 40 other than the first louver 41 can be taken into consideration.

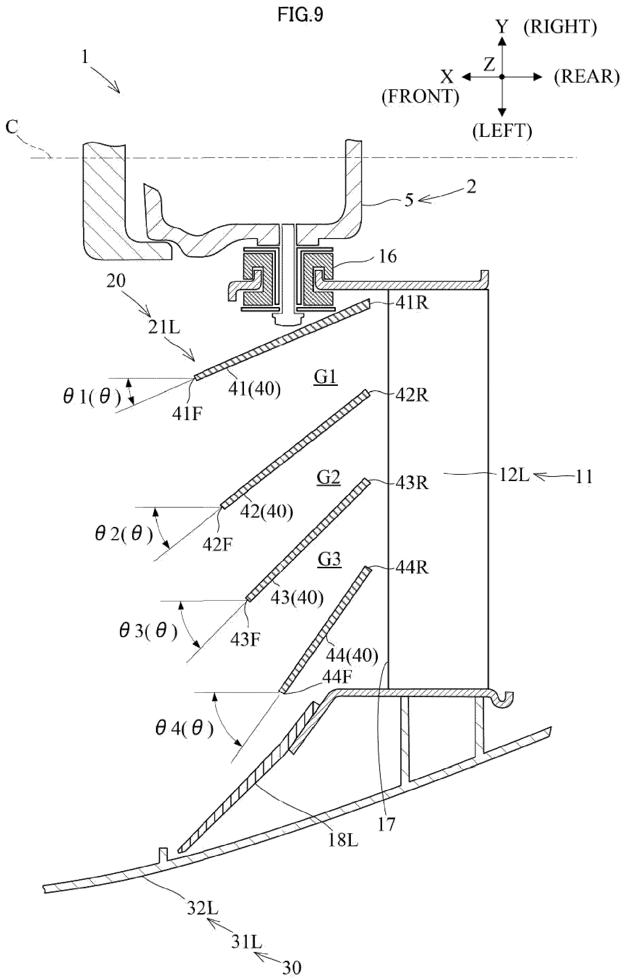

Fig. 9 is an enlarged view of a radiator grille 20 according to another modification. Like numerals are used to identify like components which are the same as those in the present embodiment, and the components will not particularly be described.

The inclination angles θ of the louvers 40 other than the first louver 41 differ from one another. Specifically, the second louver 42 has an inclination angle θ2. The third louver 43 has an inclination angle θ3. The fourth louver 44 has an inclination angle θ4. The inclination angle θ2 is different from the inclination angle θ3. The inclination angle θ2 is different from the inclination angle θ4. The inclination angle θ3 is different from the inclination angle θ4. This results in easy supply of air evenly throughout the radiator 11 even with this modification.

(2) In the embodiment, when the inner louver is the second louver 42 and the outer louver is the third louver 43, the inclination angle θ of the inner louver is equal to the inclination angle θ of the outer louver.
In the embodiment, when the inner louver is the third louver 43 and the outer louver is the fourth louver 44, the inclination angle θ of the inner louver is equal to the inclination angle θ of the outer louver. Alternatively, another relationship between the inclination angle θ of the inner louver and the inclination angle θ of the outer louver can be taken into consideration.

Reference is made to Fig. 9. When the inner louver is the second louver 42 and the outer louver is the third louver 43, the inclination angle θ of the inner louver is smaller than the inclination angle θ of the outer louver. Specifically, the inclination angle θ2 is smaller than the inclination angle θ3.

When the inner louver is the third louver 43 and the outer louver is the fourth louver 44, the inclination angle θ of the inner louver is smaller than the inclination angle θ of the outer louver. Specifically, the inclination angle θ3 is smaller than the inclination angle θ4.

According to this modification, the inclination angle θ of the louver 40 becomes smaller as the distance between the louver 40 and the vehicle center plane C is small. Accordingly, it is much easier that the inner louver receives air from an area in front thereof. Consequently, it is much easier to increase an amount of air that the inner louver guides to the radiator 11. Therefore, it is much easier to increase a supply amount of air to a region of the radiator 11 close to the inner louver. This results in much easier supply of air evenly throughout the radiator.

(3) In the embodiment, when the inner louver is the first louver 41 and the outer louver is the second louver 42, the inclination angle θ of the inner louver is smaller than the inclination angle θ of the outer louver. Alternatively, another relationship between the inclination angle θ of the inner louver and the inclination angle θ of the outer louver can be taken into consideration.

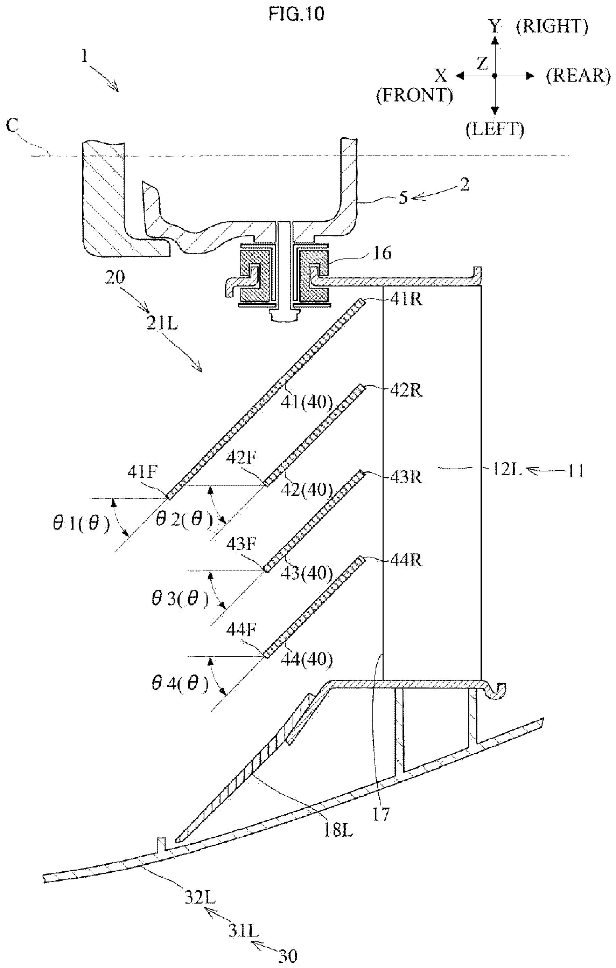

Fig. 10 is an enlarged view of a radiator grille 20 according to another modification. Like numerals are used to identify like components which are the same as those in the present embodiment, and the components will not particularly be described.

When the inner louver is the first louver 41 and the outer louver is the second louver 42, the inclination angle θ of the inner louver is equal to the inclination angle θ of the outer louver. Specifically, the inclination angle θ1 is equal to the inclination angle θ2. Also with this modification, it is easy to increase an amount of air that the inner louver guides to the radiator 11.

(4) In the embodiment, the inclination angle θ1 is smaller than any of the inclination angles θ2, θ3, and θ4. Alternatively, another relationship among the inclination angles θ1 to θ4 can be taken into consideration.

Reference is made to Fig. 10 The inclination angle θ1 is equal to the inclination angle θ2. The inclination angle θ1 is equal to the inclination angle θ3. The inclination angle θ1 is equal to the inclination angle θ4.

The inclination angle θ1 of the first louver 41 is equal to the inclination angles θ of the louvers 40 other than the first louver 41.

The inclination angles θ of the louvers 40 are equal to one another.

Also with this modification, it is easy that the first louver 41 receives air from an area in front thereof. Therefore, it is much easier to increase an amount of air that the first louver 41 guides to the radiator 11.

(5) In the embodiment, when the inner louver is the second louver 42 and the outer louver is the third louver 43, the front end of the inner louver is positioned more forward than the front end of the outer louver.
In the embodiment, when the inner louver is the third louver 43 and the outer louver is the fourth louver 44, the front end of the inner louver is positioned more forward than the front end of the outer louver.
Alternatively, another relationship between the front end of the inner louver and the front end of the outer louver can be taken into consideration.

Reference is made to Fig. 10. When the inner louver is the second louver 42 and the outer louver is the third louver 43, the front end of the inner louver is located at the same position as that of the front end of the outer louver in the front-back direction X. Specifically, the front end 42F is located at the same position as the front end 43F in the front-back direction X.

When the inner louver is the third louver 43 and the outer louver is the fourth louver 44, the front end of the inner louver is located at the same position as that of the front end of the outer louver in the front-back direction X. Specifically, the front end 43F is located at the same position as the front end 44F in the front-back direction X.

The front ends of the louvers 40 other than the first louver 41 are located at the same position in the front-back direction X. Specifically, the front ends 42F, 43F, and 44F are located at the same position in the front-back direction X.

Also with this modification, it is easy that the inner louver receives air from an area outward thereof in the transverse direction Y. Consequently, it is easy to increase an amount of air that the inner louver receives. It is easy to increase an amount of air that the inner louver guides to the radiator 11. Therefore, it is easy to increase a supply amount of air to a region of the radiator 11 close to the inner louver. This results in easy supply of air evenly throughout the radiator 11.

(6) In the embodiment, the first gap G1 is larger than the second gap G2. Alternatively, another relationship between the first gap G1 and the second gap G2 can be taken into consideration.

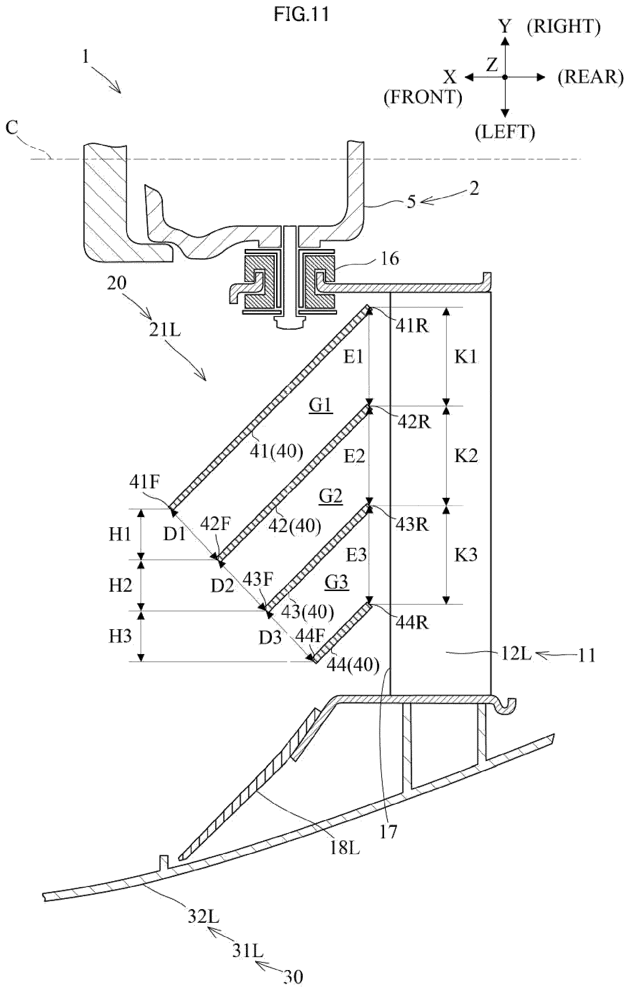

Fig. 11 is an enlarged view of a radiator grille 20 according to another modification. Like numerals are used to identify like components which are the same as those in the present embodiment, and the components will not particularly be described.

The first gap G1 has the same dimension as that of the second gap G2. Also with this modification, it is easy to increase an amount of air passing through the first gap G1.

(7) In the embodiment, the separation distance D1 is larger than the separation distance D2. Alternatively, another relationship between the separation distance D1 and the separation distance D2 can be taken into consideration.

Reference is made to Fig. 11. The separation distance D1 is equal to the separation distance D2. With this modification, the inlet of the first gap G1 is as wide as the inlet of the second gap G2. Consequently, it is easy to increase an amount of air entering the first gap G1. Therefore, it is easy to increase an amount of air passing through the first gap G1.

(8) With the embodiment, the distance H1 is larger than the distance H2. Alternatively, another relationship between the distance H1 and the distance H2 can be taken into consideration.

Reference is made to Fig. 11. The distance H1 is equal to the distance H2. Also with this modification, it is easy that air enters from an area in front of the first gap G1 into the first gap G1. Therefore, it is much easier to increase an amount of air passing through the first gap G1.

(9) In the embodiment, the separation distance D1 is larger than the separation distance E1. Alternatively, another relationship between the separation distance D1 and the separation distance E1 can be taken into consideration.

Reference is made to Fig. 11. The separation distance D1 is smaller than the separation distance E1. With this modification, the outlet of the first gap G1 is wider than the inlet of the first gap G1. Also with this modification, it is easy to supply air evenly throughout the radiator 11.

(10) With the embodiment, the distance H1 is larger than the distance K1. Alternatively, another relationship between the distance H1 and the distance K1 can be taken into consideration.

Reference is made to Fig. 11. The distance H1 is smaller than the distance K1. Also with this modification, it is easy to supply air evenly throughout the radiator 11.

(11) In the embodiment, the separation distance D1 is larger than the separation distance E1. Alternatively, another relationship between the separation distance D1 and the separation distance E1 can be taken into consideration.

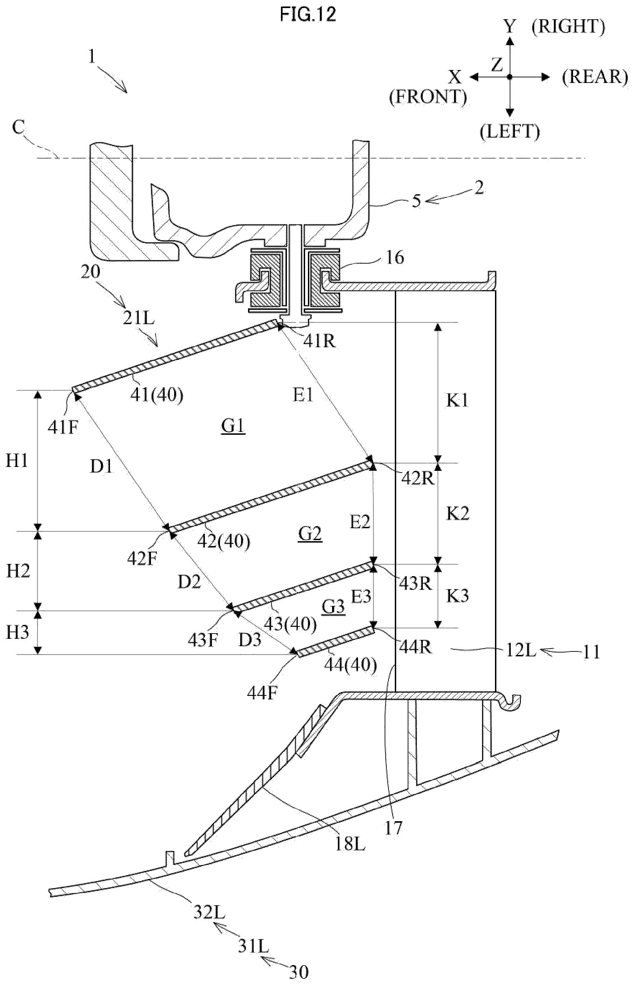

Fig. 12 is an enlarged view of a radiator grille 20 according to another modification. Like numerals are used to identify like components which are the same as those in the present embodiment, and the components will not particularly be described.

The separation distance D1 is equal to the separation distance E1. With this modification, the outlet of the first gap G1 is as narrow as the inlet of the first gap G1. Consequently, it is easy to make an air speed at the outlet of the first gap G1 equal to an air speed at the inlet of the first gap G1. Therefore, it is easy to increase an amount of air passing through the first gap G1. An amount of air passing through the first gap G1 corresponds to an amount of air that the first louver 41 guides to the radiator 11. This results in easy supply of air evenly throughout the radiator 11.

(12) In the embodiment, the separation distance D2 is smaller than the separation distance E2. Alternatively, another relationship between the separation distance D2 and the separation distance E2 can be taken into consideration. Likewise, the separation distance D3 is smaller than the separation distance E3 in the embodiment. Alternatively, another relationship between the separation distance D3 and the separation distance E3 can be taken into consideration.

Reference is made to Fig. 12. The separation distance D2 is larger than the separation distance E2. With this modification, the inlet of the second gap G2 is wider than the outlet of the second gap G2. Consequently, it is easy to increase an amount of air entering the second gap G2.

The separation distance D3 is larger than the separation distance E3. With this modification, the inlet of the third gap G3 is wider than the outlet of the third gap G3. Therefore, it is easy to increase an amount of air entering the third gap G3.

(13) With the embodiment, the distance H1 is larger than the distance K1. Alternatively, another relationship between the distance H1 and the distance K1 can be taken into consideration.

Reference is made to Fig. 12. The distance H1 is equal to the distance K1. Also with this modification, it is easy that air enters from an area in front of the first gap G1 into the first gap G1. Therefore, it is much easier to increase an amount of air passing through the first gap G1. That is, it is much easier to increase an amount of air that the first louver 41 guides to the radiator 11.

(14) In the embodiment, the rear end 41R of the first louver 41 is located at the same position as the rear end 42R of the second louver 42 in the front-back direction X. Alternatively, another relationship between the rear end 41R and the rear end 42R can be taken into consideration.

Reference is made to Fig. 12. The rear end 41R of the first louver 41 is located more forward than the rear end 42R of the second louver 42. With this modification, it is easy to make a length of the first louver 41 small. Consequently, the first louver 41 is much harder to interfere with other parts. Examples of the other parts include a supporting portion 16. That is, the first louver 41 is hard to interfere with the supporting portion 16.

(15) In the embodiment, the separation distance D2 is equal to the separation distance D3. Alternatively, another relationship between the separation distance D2 and the separation distance D3 can be taken into consideration.

Reference is made to Fig. 12. The separation distance D2 is larger than the separation distance D3. With this modification, the inlet of the second gap G2 is wider than the inlet of the third gap G3. Consequently, it is easy to increase an amount of air entering the second gap G2. Therefore, it is much easier to increase an amount of air passing through the second gap G2.

(16) In the embodiment, the distance H2 is equal to the distance H3. Alternatively, another relationship between the distance H2 and the distance H3 can be taken into consideration.

Reference is made to Fig. 12. The distance H2 is larger than the distance H3. Also with this modification, it is easy that air enters from an area in front of the second gap G2 into the second gap G2. Therefore, it is much easier to increase an amount of air passing through the second gap G2.

(17) In the embodiment, the second gap G2 has the dimension equal to the dimension of the third gap G3. Alternatively, another relationship between the second gap G2 and the third gap G3 can be taken into consideration.

Reference is made to Fig. 12. The second gap G2 is larger than the third gap G3. With this modification, it is easy to increase an amount of air passing through the second gap G2.

(18) In the embodiment, the separation distance E1 is equal to the separation distance E2. Alternatively, another relationship between the separation distance E1 and the separation distance E2 can be taken into consideration.

Reference is made to Fig. 12. The separation distance E1 is larger than the separation distance E2. With this modification, the outlet of the first gap G1 is wider than the outlet of the second gap G2. Therefore, it is easy to increase an amount of air passing through the first gap G1.

(19) In the embodiment, the separation distance E2 is equal to the separation distance E3. Alternatively, another relationship between the separation distance E2 and the separation distance E3 can be taken into consideration.

Reference is made to Fig. 12. The separation distance E2 is larger than the separation distance E3. With this modification, the outlet of the second gap G2 is wider than the outlet of the third gap G3. Therefore, it is easy to increase an amount of air passing through the second gap G2.

(20) In the embodiment, the distance K1 is equal to the distance K2. Alternatively, another relationship between the distance K1 and the distance K2 can be taken into consideration.

Reference is made to Fig. 12. The distance K1 is larger than the distance K2. With this modification, it is easy to increase an amount of air passing through the first gap G1.

(21) In the embodiment, the distance K2 is equal to the distance K3. Alternatively, another relationship between the distance K2 and the distance K3 can be taken into consideration.

Reference is made to Fig. 12. The distance K2 is larger than the distance K3. With this modification, it is easy to increase an amount of air passing through the second gap G2.

(22) In the embodiment, the separation distance D2 is smaller than the separation distance E2. Alternatively, another relationship between the separation distance D2 and the separation distance E2 can be taken into consideration.

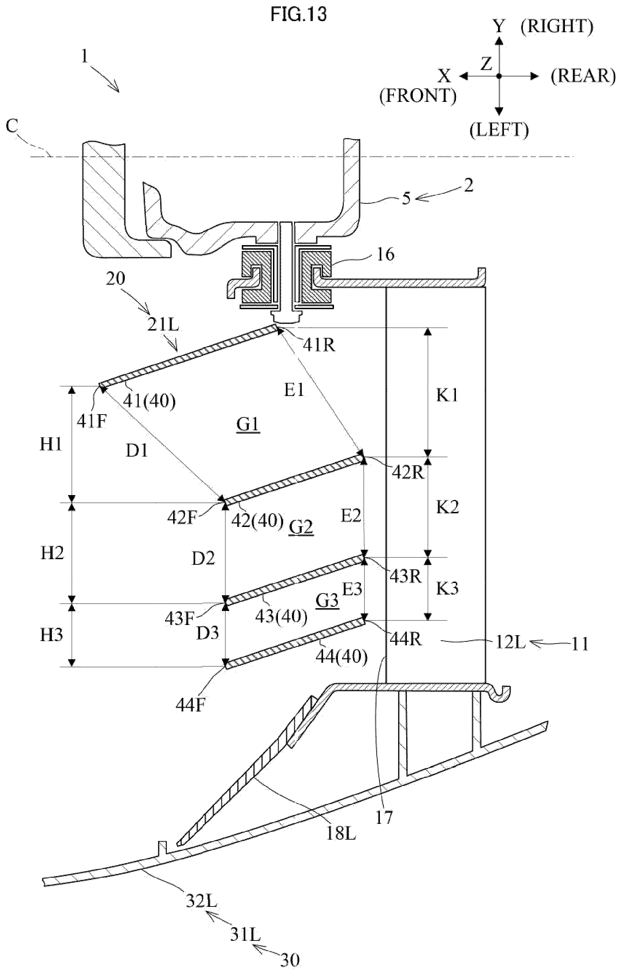

Reference is made to Fig. 13. The separation distance D2 is equal to the separation distance E2. With this modification, the inlet of the second gap G2 is as wide as the outlet of the second gap G2. Consequently, it is easy to increase an amount of air entering the second gap G2. Therefore, it is easy to increase an amount of air passing through the second gap G2.

(23) In the embodiment, the separation distance D3 is smaller than the separation distance E3. Alternatively, another relationship between the separation distance D3 and the separation distance E3 can be taken into consideration.

Reference is made to Fig. 13. The separation distance D3 is equal to the separation distance E3. With this modification, the inlet of the third gap G3 is as wide as the outlet of the third gap G3. Consequently, it is easy to increase an amount of air entering the third gap G3. Therefore, it is easy to increase an amount of air passing through the third gap G3.

(24) In the embodiment, the distance H2 is smaller than the distance K2. Alternatively, another relationship between the distance H2 and the distance K2 can be taken into consideration.

Reference is made to Fig. 13. The distance H2 is equal to the distance K2. With this modification, the inlet of the second gap G2 is as wide as the outlet of the second gap G2. Consequently, it is easy to increase an amount of air entering the second gap G2. Therefore, it is easy to increase an amount of air passing through the second gap G2.

(25) In the embodiment, the distance H3 is smaller than the distance K3. Alternatively, another relationship between the distance H3 and the distance K3 can be taken into consideration.

Reference is made to Fig. 13. The distance H3 is equal to the distance K3. With this modification, the inlet of the third gap G3 is as wide as the outlet of the third gap G3. Consequently, it is easy to increase an amount of air entering the third gap G3. Therefore, it is easy to increase an amount of air passing through the third gap G3.

(26) In the embodiment, the first set of louvers 40 included in the left radiator grille 21L is formed by four louvers 40. The first set includes the first louver 41, the second louver 42, the third louver 43, and the fourth louver 44. Alternatively, another construction of the first set can be taken into consideration.

For example, the first set may be formed by two louvers 40. The first set may be formed by three louvers 40. The first set may be formed by more than four louvers.

For example, the fourth louver 44 may be omitted.

For example, the third louver 43 may be omitted.

For example, the first set may further include a fifth louver not shown.

Similarly to the first set, the second set of the louvers 40 included in the right radiator grille 21R may be changed.

(27) In the embodiment, the radiator 11 includes the left part 12L and the right part 12R. Alternatively, the radiator 11 may include either the left part 12L or the right part 12R. For example, only the left part 12L may be included. Moreover, only the right part 12R may be included. Consequently, it is easy to locate the radiator 11 at a suitable position.

(28) In the embodiment, the left part 12L and the right part 12R are separated from each other. Alternatively, another relationship between the left part 12L and the right part 12R can be taken into consideration. For example, the left part 12L and the right part 12R may be connected to each other. The left part 12L and the right part 12R bay be integrated.

(29) The foregoing embodiment and each of the modifications described in paragraphs (1) to (28) above may be further varied as appropriate by replacing or combining their constructions with the constructions of the other modifications without departing from the scope of the present invention as defined by the appended claims.

### Reference Signs List

- 1:: straddled vehicle
- 2:: body frame
- 3:: head tube
- 4:: main frame
- 5:: down frame
- 6:: steering device
- 7:: front fork
- 8:: front wheel
- 9:: front fender
- 10:: engine
- 11:: radiator
- 12L:: left part
- 12R:: right part
- 13:: upper tank
- 14:: lower tank
- 15:: pipe
- 16:: supporting portion
- 17:: front face
- 18L:: left guide plate
- 18R:: right guide plate
- 20:: radiator grille
- 21L:: left radiator grille
- 21R:: right radiator grille
- 30:: shroud
- 31L:: left shroud
- 31R:: right shroud
- 32L:: left bulge
- 32R:: right bulge
- 40:: louver
- 41:: first louver
- 42:: second louver
- 43:: third louver
- 44:: fourth louver

## Claims

1. A straddled vehicle (1), comprising:
a head tube (3);
a front fork (7) supported by the head tube (3);
a front wheel (8) supported by the front fork (7);
a left shroud (31L) located leftward of the front fork (7) with regard to a transverse direction (Y) of the straddled vehicle (1) and higher than the front wheel (8) with regard to an up-down direction (Z) of the straddled vehicle (1);
a right shroud (31R) located rightward of the front fork (7) with regard to the transverse direction (Y) of the straddled vehicle (1) and higher than the front wheel (8) with regard to an up-down direction (Z) of the straddled vehicle (1);
a radiator (11) located rearward of the front fork (7) and between the left shroud (31L) and the right shroud (31R); and
a radiator grille (20) located rearward of the front fork (7) with regard to a front-back direction (X) of the straddled vehicle (1), between the left shroud (31L) and the right shroud (31R), and forward of the radiator (11) with regard to the front-back direction (X) of the straddled vehicle (1);
wherein
the radiator grille (20) includes a plurality of louvers (40),
the louvers (40) are lined in the transverse direction (Y) of the straddled vehicle (1), and
when it is assumed that a virtual plane passing through a center of the head tube (3) and perpendicular to the transverse direction (Y) of the straddled vehicle (1), is a vehicle center plane (C), and
when it is assumed that, among all the louvers (40), a louver closest to the vehicle center plane (C) is a first louver (41), **characterized in that**
the first louver (41) projects more forward than the louvers (40) other than the first louver (41) with regard to the front-back direction (X) of the straddled vehicle (1).

2. The straddled vehicle (1) according to claim 1, **characterized in that** when it is assumed that one of two louvers (41,42) adjacent in the transverse direction (Y) of the straddled vehicle (1) that is closer to the vehicle center plane (C) is an inner louver (41) and the other of the two louvers (41,42) is an outer louver (42) with regard to the transverse direction (Y) of the straddled vehicle (1),
the inner louver (41) has a front end (41F) with regard to the front-back direction (X) of the straddled vehicle (1),
the outer louver (42) has front end (42F) with regard to the front-back direction (X) of the straddled vehicle (1), and
the front end (41F) of the inner louver (41) is located at a position equal to or more forward than the front end (42F) of the outer louver (42) in the front-back direction (X) of the straddled vehicle (1).

3. The straddled vehicle (1) according to claim 2, **characterized in that** the front end (41F) of the inner louver (41) is located more forward than the front end (42F) of the outer louver (42) with regard to the front-back direction (X) of the straddled vehicle (1).

4. The straddled vehicle (1) according to at least one of the claims 1 to 3, **characterized in that** the louvers (40) each have an inclination angle (θ) with respect to the front-back direction (X) of the straddled vehicle (1), and
the inclination angle (θ1) of the first louver (41) is equal to or smaller than the inclination angles (θ) of the louvers (40) other than the first louver (41).

5. The straddled vehicle (1) according to claim 4, **characterized in that** the inclination angles of the louvers (40) other than the first louver (41) are equal to one another.

6. The straddled vehicle (1) according to at least one of the claims 1 to 5, **characterized in that** when it is assumed that one of two louvers (41,42) adjacent in the transverse direction (Y) that is closer to the vehicle center plane (C) is an inner louver (41) and the other of the two louvers (41,42) is an outer louver (42) with regard to the transverse direction (Y) of the straddled vehicle (1),
the inner louver (41) has an inclination angle (θ1) with respect to the front-back direction (X) of the straddled vehicle (1),
the outer louver (42) has an inclination angle (θ2) with respect to the front-back direction (X), and
the inclination angle (θ1) of the inner louver (41) is equal to or smaller than the inclination angle (θ2) of the outer louver (42).

7. The straddled vehicle (1) according to claim 6, **characterized in that** the inclination angle (θ1) of the inner louver (41) is smaller than the inclination angle (θ2) of the outer louver (42).

8. The straddled vehicle (1) according to at least one of the claims 1 to 7, **characterized in that** when it is assumed that a louver outward of the first louver (41) in the transverse direction (Y) of the straddled vehicle (1) and closest to the first louver (41) is a second louver (42),
the first louver (41) has a front end (41F) and a rear end (41R) with regard to the front-back direction (X) of the straddled vehicle (1),
the second louver (42) has a front end (42F) and a rear end (42R) with regard to the front-back direction (X) of the straddled vehicle (1), and
a separation distance (D1) between the front end (41F) of the first louver (41) and the front end (42F) of the second louver (42) is equal to or larger than a separation distance (E1) between the rear end (41R) of the first louver (41) and the rear end (42R) of the second louver (42).

9. The straddled vehicle (1) according to claim 8, **characterized in that** a distance (H1) in the transverse direction (Y) of the straddled vehicle (1) between the front end (41F) of the first louver (41) and the front end (42F) of the second louver (42) is equal to or larger than a distance (K1) in the transverse direction (Y) of the straddled vehicle (1) between the rear end (41R) of the first louver (41) and the rear end (42R) of the second louver (42).

10. The straddled vehicle (1) according to claim 8 or 9, **characterized in that** the rear end (41R) of the first louver (41) is located at a position equal to or more forward than the rear end (42R) of the second louver (42) in the front-back direction (X) of the straddled vehicle (1).

11. The straddled vehicle (1) according to at least one of the claims 8 to 10, **characterized in that** the rear end (41R) of the first louver (41) is located more forward than the rear end (42R) of the second louver (42) in the front-back direction (X) of the straddled vehicle (1).

12. The straddled vehicle (1) according to at least one of the claims 8 to 11, **characterized in that** when it is assumed that a louver outward of the second louver (42) in the transverse direction (Y) of the straddled vehicle (1) and closest to the second louver (42) is a third louver (43),
a first gap (G1) between the first louver (41) and the second louver (42) is equal to or larger than a second gap (G2) between the second louver (42) and the third louver (43).

13. The straddled vehicle (1) according to claim 12, **characterized in that** the third louver (43) has a front end (43F) with regard to the front-back direction (X) of the straddled vehicle (1), and
the separation distance (D1) between the front end (41F) of the first louver (41) and the front end (42F) of the second louver (42) is equal to or larger than a separation distance (D2) between the front end (42F) of the second louver (42) and the front end (43F) of the third louver (43).

14. The straddled vehicle (1) according to claim 13, **characterized in that** a distance (H1) in the transverse direction (Y) of the straddled vehicle (1) between the front end (41F) of the first louver (41) and the front end (42F) of the second louver (42) is equal to or larger than a distance (H2) in the transverse direction (Y) of the straddled vehicle (1) between the front end (42F) of the second louver (42) and the front end (43F) of the third louver (43).

15. The straddled vehicle (1) according to at least one of the claims 12 to 14, **characterized in that** the third louver (43) has a rear end (43R) with regard to the front-back direction (X) of the straddled vehicle (1), and
the rear end (43R) of the third louver (43) is located at a position equal to the rear end (42R) of the second louver (42) in the front-back direction (X) of the straddled vehicle (1).

## Patentansprüche

1. Ein Spreizsitzfahrzeug (1), das umfasst:
ein Kopfrohr (3);
eine Vorderradgabel (7), die vom Kopfrohr (3) gelagert wird;
ein Vorderrad (8), das von der Vorderradgabel (7) gelagert wird;
eine linke Verkleidung (31L), die in Bezug auf eine Querrichtung (Y) des Spreizsitzfahrzeugs (1) links von der Vorderradgabel (7) und in Bezug auf eine Auf-Ab-Richtung (Z) des Spreizsitzfahrzeugs (1) höher als das Vorderrad (8) angeordnet ist;
eine rechte Verkleidung (31R), die in Bezug auf die Querrichtung (Y) des Spreizsitzfahrzeugs (1) rechts von der Vorderradgabel (7) und in Bezug auf die Auf-Ab-Richtung (Z) des Spreizsitzfahrzeugs (1) höher als das Vorderrad (8) angeordnet ist;
einen Kühler (11), der hinter der Vorderradgabel (7) und zwischen der linken Verkleidung (31L) und der rechten Verkleidung (31R) angeordnet ist; und
einen Kühlergrill (20), der hinter der Vorderradgabel (7) in Bezug auf eine Fahrzeug-Vorder-Rück-Richtung (X) des Spreizsitzfahrzeugs (1) angeordnet ist, zwischen der linken Verkleidung (31L) und der rechten Verkleidung (31R) und vor dem Kühler (11) in Bezug auf die Vorder-Rück-Richtung (X) des Spreizsitzfahrzeugs (1) angeordnet ist; wobei
der Kühlergrill (20) eine Mehrzahl von Lamellen (40) enthält,
die Lamellen (40) in Querrichtung (Y) des Spreizsitzfahrzeugs (1) angeordnet sind und
wenn angenommen wird, dass eine virtuelle Ebene, die durch die Mitte des Kopfrohrs (3) verläuft und senkrecht zur Querrichtung (Y) des Spreizsitzfahrzeugs (1) steht, eine Fahrzeugmittelebene (C) ist, und wenn angenommen wird, dass unter allen Lamellen (40) eine Lamelle, die der Fahrzeugmittelebene (C) am nächsten liegt, eine erste Lamelle (41) ist, **dadurch gekennzeichnet, dass**
die erste Lamelle (41) in Bezug auf die Vorder-Rück-Richtung (X) des Spreizsitzfahrzeugs (1) weiter nach vorne ragt als die anderen Lamellen (40) außer der ersten Lamelle (41).

2. Das Spreizsitzfahrzeug (1) gemäß Anspruch 1, **dadurch gekennzeichnet, dass**, wenn angenommen wird, dass eine von zwei Lamellen (41, 42), die in Querrichtung (Y) des Spreizsitzfahrzeugs (1) nebeneinander liegen, näher an der Fahrzeugmittelebene (C) liegen, eine innere Lamelle (41) ist und die andere der beiden Lamellen (41, 42) eine äußere Lamelle (42) in Bezug auf die Querrichtung (Y) des Spreizsitzfahrzeugs (1) ist,
die innere Lamelle (41) ein vorderes Ende (41F) in Bezug auf die Vorder-Rück-Richtung (X) des Spreizsitzfahrzeugs (1) aufweist,
die äußere Lamelle (42) ein vorderes Ende (42F) in Bezug auf die Vorder-Rück-Richtung (X) des Spreizsitzfahrzeugs (1) aufweist, und
das vordere Ende (41F) der inneren Lamelle (41) befindet sich an einer Position, die gleich oder weiter vorne liegt als das vordere Ende (42F) der äußeren Lamelle (42) in der Vorder-Rück-Richtung (X) des Spreizsitzfahrzeugs (1).

3. Das Spreizsitzfahrzeug (1) gemäß Anspruch 2, **dadurch gekennzeichnet, dass** sich das vordere Ende (41F) der inneren Lamelle (41) in Bezug auf die Vorder-Rück-Richtung (X) des Spreizsitzfahrzeugs (1) weiter vorne befindet als das vordere Ende (42F) der äußeren Lamelle (42).

4. Das Spreizsitzfahrzeug (1) gemäß zumindest einem der Ansprüche 1 bis 3, **dadurch gekennzeichnet, dass** die Lamellen (40) jeweils einen Neigungswinkel (θ) in Bezug auf die Vorder-Rück-Richtung (X) des Spreizsitzfahrzeugs (1) aufweisen und
der Neigungswinkel (θ1) der ersten Lamelle (41) gleich oder kleiner ist als die Neigungswinkel (θ) der anderen Lamellen (40) außer der ersten Lamelle (41).

5. Das Spreizsitzfahrzeug (1) gemäß Anspruch 4, **dadurch gekennzeichnet, dass** die Neigungswinkel der Lamellen (40) außer der ersten Lamelle (41) gleich sind.

6. Das Spreizsitzfahrzeug (1) gemäß zumindest einem der Ansprüche 1 bis 5, **dadurch gekennzeichnet, dass**, wenn angenommen wird, dass eine von zwei in Querrichtung (Y) benachbarten Lamellen (41, 42), die näher an der Fahrzeugmittelebene (C) liegt, eine innere Lamelle (41) ist und die andere der beiden Lamellen (41, 42) eine äußere Lamelle (42) in Bezug auf die Querrichtung (Y) des Spreizsitzfahrzeugs (1) ist,
die innere Lamelle (41) einen Neigungswinkel (θ1) in Bezug auf die Vorder-Rück-Richtung (X) des Spreizsitzfahrzeugs (1) aufweist,
die äußere Lamelle (42) einen Neigungswinkel (θ2) in Bezug auf die Vorder-Rück-Richtung (X) aufweist und der Neigungswinkel (θ1) der inneren Lamelle (41) gleich oder kleiner als der Neigungswinkel (θ2) der äußeren Lamelle (42) ist.

7. Das Spreizsitzfahrzeug (1) gemäß Anspruch 6, **dadurch gekennzeichnet, dass** der Neigungswinkel (θ1) der inneren Lamelle (41) kleiner ist als der Neigungswinkel (θ2) der äußeren Lamelle (42).

8. Das Spreizsitzfahrzeug (1) gemäß zumindest einem der Ansprüche 1 bis 7, **dadurch gekennzeichnet, dass**, wenn angenommen wird, dass eine Lamelle außerhalb der ersten Lamelle (41) in Querrichtung (Y) des Spreizsitzfahrzeugs (1) und am nächsten zur ersten Lamelle (41) eine zweite Lamelle (42) ist,
die erste Lamelle (41) ein vorderes Ende (41F) und ein hinteres Ende (41R) in Bezug auf die Vorder-Rück-Richtung (X) des Spreizsitzfahrzeugs (1) aufweist,
die zweite Lamelle (42) ein vorderes Ende (42F) und ein hinteres Ende (42R) in Bezug auf die Vorder-Rück-Richtung (X) des Spreizsitzfahrzeugs (1) aufweist, und ein Abstand (D1) zwischen dem vorderen Ende (41F) der ersten Lamelle (41) und dem vorderen Ende (42F) der zweiten Lamelle (42) gleich oder größer ist als ein Abstand (E1) zwischen dem hinteren Ende (41R) der ersten Lamelle (41) und dem hinteren Ende (42R) der zweiten Lamelle (42).

9. Das Spreizsitzfahrzeug (1) gemäß Anspruch 8, **dadurch gekennzeichnet, dass** ein Abstand (H1) in Querrichtung (Y) des Spreizsitzfahrzeugs (1) zwischen dem vorderen Ende (41F) der ersten Lamelle (41) und dem vorderen Ende (42F) der zweiten Lamelle (42) gleich oder größer ist als ein Abstand (K1) in der Querrichtung (Y) des Spreizsitzfahrzeugs (1) zwischen dem hinteren Ende (41R) der ersten Lamelle (41) und dem hinteren Ende (42R) der zweiten Lamelle (42).

10. Das Spreizsitzfahrzeug (1) gemäß Anspruch 8 oder 9, **dadurch gekennzeichnet, dass** sich das hintere Ende (41R) der ersten Lamelle (41) an einer Position befindet, die gleich oder weiter vorne liegt als das hintere Ende (42R) der zweiten Lamelle (42) in der Vorder-Rück-Richtung (X) des Spreizsitzfahrzeugs (1).

11. Das Spreizsitzfahrzeug (1) gemäß zumindest einem der Ansprüche 8 bis 10, **dadurch gekennzeichnet, dass** sich das hintere Ende (41R) der ersten Lamelle (41) in der Vorder-Rück-Richtung (X) des Spreizsitzfahrzeugs (1) weiter vorne befindet als das hintere Ende (42R) der zweiten Lamelle (42).

12. Das Spreizsitzfahrzeug (1) gemäß zumindest einem der Ansprüche 8 bis 11, **dadurch gekennzeichnet, dass**, wenn angenommen wird, dass eine Lamelle außerhalb der zweiten Lamelle (42) in Querrichtung (Y) des Spreizsitzfahrzeugs (1) und am nächsten zur zweiten Lamelle (42) eine dritte Lamelle (43) ist,
ein erster Spalt (G1) zwischen der ersten Lamelle (41) und der zweiten Lamelle (42) gleich oder größer ist als ein zweiter Spalt (G2) zwischen der zweiten Lamelle (42) und der dritten Lamelle (43).

13. Das Spreizsitzfahrzeug (1) gemäß Anspruch 12, **dadurch gekennzeichnet, dass** die dritte Lamelle (43) ein vorderes Ende (43F) in Bezug auf die Vorder-Rück-Richtung (X) des Spreizsitzfahrzeugs (1) aufweist und
der Abstand (D1) zwischen dem vorderen Ende (41F) der ersten Lamelle (41) und dem vorderen Ende (42F) der zweiten Lamelle (42) gleich oder größer ist als ein Abstand (D2) zwischen dem vorderen Ende (42F) der zweiten Lamelle (42) und dem vorderen Ende (43F) der dritten Lamelle (43).

14. Das Spreizsitzfahrzeug (1) gemäß Anspruch 13, **dadurch gekennzeichnet, dass** ein Abstand (H1) in Querrichtung (Y) des Spreizsitzfahrzeugs (1) zwischen dem vorderen Ende (41F) der ersten Lamelle (41) und dem vorderen Ende (42F) der zweiten Lamelle (42) gleich oder größer ist als ein Abstand (H2) in der Querrichtung (Y) des Spreizsitzfahrzeugs (1) zwischen dem vorderen Ende (42F) der zweiten Lamelle (42) und dem vorderen Ende (43F) der dritten Lamelle (43).

15. Das Spreizsitzfahrzeug (1) gemäß zumindest einem der Ansprüche 12 bis 14,
**dadurch gekennzeichnet, dass** die dritte Lamelle (43) ein hinteres Ende (43R) in Bezug auf die Vorder-Rück-Richtung (X) des Spreizsitzfahrzeugs (1) aufweist und das hintere Ende (43R) der dritten Lamelle (43) sich in einer Position befindet, die dem hinteren Ende (42R) der zweiten Lamelle (42) in der Vorder-Rück-Richtung (X) des Spreizsitzfahrzeugs (1) entspricht.

## Revendications

1. Véhicule à enfourcher (1), comprenant :
un tube de tête (3) ;
une fourche avant (7) supportée par le tube de tête (3) ;
une roue avant (8) supportée par la fourche avant (7) ;
un carénage gauche (31L) situé à gauche de la fourche avant (7) par rapport à la direction transversale (Y) du véhicule à enfourcher (1) et plus haut que la roue avant (8) par rapport à la direction haut-bas (Z) du véhicule à enfourcher (1) ;
un carénage droit (31R) situé à droite de la fourche avant (7) par rapport à la direction transversale (Y) du véhicule à enfourcher (1) et plus haut que la roue avant (8) par rapport à la direction haut-bas (Z) du véhicule à enfourcher (1) ;
un radiateur (11) situé en arrière de la fourche avant (7) et entre le carénage gauche (31L) et le carénage droit (31R) ; et
une grille de radiateur (20) située en arrière de la fourche avant (7) par rapport à la direction avant-arrière (X) du véhicule à enfourcher (1), entre le carénage gauche (31L) et le carénage droit (31R), et en avant du radiateur (11) par rapport à la direction avant-arrière (X) du véhicule à enfourcher (1) ;
dans lequel
la grille de radiateur (20) inclut une pluralité de lames (40),
les lames (40) sont alignées en direction transversale (Y) du véhicule à enfourcher (1), et
en considérant qu'un plan virtuel passant par le centre du tube de tête (3) et perpendiculaire à la direction transversale (Y) du véhicule à enfourcher (1) est un plan central du véhicule (C), et
en considérant que, parmi toutes les lames (40), la lame la plus proche du plan central du véhicule (C) est la première lame (41),
**caractérisé en ce que**
la première lame (41) se projette plus en avant que les lames (40) autres que la première lame (41), par rapport à la direction avant-arrière (X) du véhicule à enfourcher (1).

2. Véhicule à enfourcher (1) selon la revendication 1, **caractérisé en ce que**
en considérant que l'une de deux lames (41, 42) adjacentes en direction transversale (Y) du véhicule à enfourcher (1) qui est plus proche du plan central du véhicule (C) est une lame interne (41) et que l'autre des deux lames (41, 42) est une lame externe (42) par rapport à la direction transversale (Y) du véhicule à enfourcher (1),
la lame interne (41) comporte une extrémité avant (41F) par rapport à la direction avant-arrière (X) du véhicule à enfourcher (1),
la lame externe (42) comporte une extrémité avant (42F) par rapport à la direction avant-arrière (X) du véhicule à enfourcher (1), et
l'extrémité avant (41F) de la lame interne (41) est située à une position à même hauteur ou plus en avant que l'extrémité avant (42F) de la lame externe (42) en direction avant-arrière (X) du véhicule à enfourcher (1).

3. Véhicule à enfourcher (1) selon la revendication 2, **caractérisé en ce que**
l'extrémité avant (41F) de la lame interne (41) est située plus en avant que l'extrémité avant (42F) de la lame externe (42) par rapport à la direction avant-arrière (X) du véhicule à enfourcher (1).

4. Véhicule à enfourcher (1) selon au moins l'une des revendications 1 à 3, **caractérisé en ce que**
les lames (40) présentent chacune un angle d'inclinaison (θ) par rapport à la direction avant-arrière (X) du véhicule à enfourcher (1), et
l'angle d'inclinaison (θ1) de la première lame (41) est inférieur ou égal aux angles d'inclinaison (θ) des lames (40) autres que la première lame (41).

5. Véhicule à enfourcher (1) selon la revendication 4, **caractérisé en ce que**
les angles d'inclinaison des lames (40) autres que la première lame (41) sont égaux entre eux.

6. Véhicule à enfourcher (1) selon au moins l'une des revendications 1 à 5, **caractérisé en ce que**
en considérant que l'une de deux lames (41, 42) adjacentes en direction transversale (Y) qui est plus proche du plan central du véhicule (C) est une lame interne (41) et que l'autre des deux lames (41, 42) est une lame externe (42) par rapport à la direction transversale (Y) du véhicule à enfourcher (1),
la lame interne (41) présente un angle d'inclinaison (θ1) par rapport à la direction avant-arrière (X) du véhicule à enfourcher (1),
la lame externe (42) présente un angle d'inclinaison (θ2) par rapport à la direction avant-arrière (X), et
l'angle d'inclinaison (θ1) de la lame interne (41) est inférieur ou égal à l'angle d'inclinaison (θ2) de la lame externe (42).

7. Véhicule à enfourcher (1) selon la revendication 6, **caractérisé en ce que**
l'angle d'inclinaison (θ1) de la lame interne (41) est inférieur à l'angle d'inclinaison (θ2) de la lame externe (42).

8. Véhicule à enfourcher (1) selon au moins l'une des revendications 1 à 7, **caractérisé en ce que**
en considérant qu'une lame située à l'extérieur de la première lame (41) en direction transversale (Y) du véhicule à enfourcher (1) et la plus proche de la première lame (41) est une deuxième lame (42),
la première lame (41) comporte une extrémité avant (41F) et une extrémité arrière (41R) par rapport à la direction avant-arrière (X) du véhicule à enfourcher (1),
la deuxième lame (42) comporte une extrémité avant (42F) et une extrémité arrière (42R) par rapport à la direction avant-arrière (X) du véhicule à enfourcher (1), et
la distance de séparation (D1) entre l'extrémité avant (41F) de la première lame (41) et l'extrémité avant (42F) de la deuxième lame (42) est supérieure ou égale à la distance de séparation (E1) entre l'extrémité arrière (41R) de la première lame (41) et l'extrémité arrière (42R) de la deuxième lame (42).

9. Véhicule à enfourcher (1) selon la revendication 8, **caractérisé en ce que**
la distance (H1) en direction transversale (Y) du véhicule à enfourcher (1) entre l'extrémité avant (41F) de la première lame (41) et l'extrémité avant (42F) de la deuxième lame (42) est supérieure ou égale à la distance (K1) en direction transversale (Y) du véhicule à enfourcher (1) entre l'extrémité arrière (41R) de la première lame (41) et l'extrémité arrière (42R) de la deuxième lame (42).

10. Véhicule à enfourcher (1) selon la revendication 8 ou 9, **caractérisé en ce que**
l'extrémité arrière (41R) de la première lame (41) est située à une position à même hauteur ou plus en avant que l'extrémité arrière (42R) de la deuxième lame (42) en direction avant-arrière (X) du véhicule à enfourcher (1).

11. Véhicule à enfourcher (1) selon au moins l'une des revendications 8 à 10, **caractérisé en ce que**
l'extrémité arrière (41R) de la première lame (41) est située plus en avant que l'extrémité arrière (42R) de la deuxième lame (42) en direction avant-arrière (X) du véhicule à enfourcher (1).

12. Véhicule à enfourcher (1) selon au moins l'une des revendications 8 à 11, **caractérisé en ce que**
en considérant qu'une lame à l'extérieur de la deuxième lame (42) en direction transversale (Y) du véhicule à enfourcher (1) et la plus proche de la deuxième lame (42) est une troisième lame (43), un premier espace (G1) entre la première lame (41) et la deuxième lame (42) est supérieur ou égal à un deuxième espace (G2) entre la deuxième lame (42) et la troisième lame (43).

13. Véhicule à enfourcher (1) selon la revendication 12, **caractérisé en ce que**
la troisième lame (43) comporte une extrémité avant (43F) par rapport à la direction avant-arrière (X) du véhicule à enfourcher (1), et
la distance de séparation (D1) entre l'extrémité avant (41F) de la première lame (41) et l'extrémité avant (42F) de la deuxième lame (42) est supérieure ou égale à la distance de séparation (D2) entre l'extrémité avant (42F) de la deuxième lame (42) et l'extrémité avant (43F) de la troisième lame (43).

14. Véhicule à enfourcher (1) selon la revendication 13, **caractérisé en ce que**
la distance (H1) en direction transversale (Y) du véhicule à enfourcher (1) entre l'extrémité avant (41F) de la première lame (41) et l'extrémité avant (42F) de la deuxième lame (42) est supérieure ou égale à la distance (H2) en direction transversale (Y) du véhicule à enfourcher (1) entre l'extrémité avant (42F) de la deuxième lame (42) et l'extrémité avant (43F) de la troisième lame (43).

15. Véhicule à enfourcher (1) selon au moins l'une des revendications 12 à 14, **caractérisé en ce que**
la troisième lame (43) comporte une extrémité arrière (43R) par rapport à la direction avant-arrière (X) du véhicule à enfourcher (1), et
l'extrémité arrière (43R) de la troisième lame (43) est située à une position à même hauteur que l'extrémité arrière (42R) de la deuxième lame (42) en direction avant-arrière (X) du véhicule à enfourcher (1).
